(19) Europäisches Patentamt
European Patent Office
Office européen des brevets

(11) EP 2 845 872 A1

(12) **EUROPÄISCHE PATENTANMELDUNG**

(43) Veröffentlichungstag:
**11.03.2015 Patentblatt 2015/11**

(51) Int Cl.:
***C08G 65/26*** *(2006.01)* ***C08G 64/18*** *(2006.01)*

(21) Anmeldenummer: **13183206.5**

(22) Anmeldetag: **05.09.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Bayer MaterialScience AG**
**51373 Leverkusen (DE)**

(72) Erfinder: **Die Erfindernennung liegt noch nicht vor**

(74) Vertreter: **BIP Patents**
**c/o Bayer Intellectual Property GmbH**
**Creative Campus Monheim**
**Alfred-Nobel-Straße 10**
**40789 Monheim (DE)**

(54) **Niederviskose Polyethercarbonatpolyole mit Seitenketten**

(57) Die vorliegende Erfindung betrifft ein Verfahren zur Herstellung niedrigviskoser Polyethercarbonatpolyole mit Seitenketten umfassend die Schritte (α) Vorlegen eines Suspensionsmittels, das keine H-funktionellen Gruppen enthält oder einer H-funktionellen Starterverbindung, und eines Katalysators und (γ) Zudosieren von Kohlendioxid und mindestens zweier Alkylenoxide, dadurch gekennzeichnet, dass die Differenz des Molekulargewichts des leichtesten und des schwersten der in der Stufe (γ) zudosierten Alkylenoxide größer oder gleich 24 g/mol beträgt und das leichteste Alkylenoxid ein C2-C4-Alkylenoxid ist. Desweiteren betrifft die Erfindung niedrigviskose Polyethercarbonatpolyole herstellbar nach dem erfindungsgemäßen Verfahren sowie deren Verwendung.

EP 2 845 872 A1

## Beschreibung

Die vorliegende Erfindung betrifft ein Verfahren zur Herstellung von Polyethercarbonatpolyolen mit Seitenketten umfassend die Schritte (α) Vorlegen eines Suspensionsmittels, das keine H-funktionellen Gruppen enthält oder einer H-funktionellen Starterverbindung, und eines Katalysators und (γ) Zudosieren von Kohlendioxid und mindestens zweier Alkylenoxide, dadurch gekennzeichnet, dass die Differenz des Molekulargewichts des leichtesten und des schwersten der in der Stufe (γ) zudosierten Alkylenoxide größer oder gleich 24 g/mol beträgt und das leichteste Alkylenoxid ein C2-C4-Alkylenoxid ist. Desweiteren betrifft die Erfindung Polyethercarbonatpolyole, dienach dem erfindungsgemäßen Verfahren herstellbar sind sowie deren Verwendung.

Moderne Kunststoffe sollen neben einer maßgeschneiderten Funktionalität auch verstärkt ökologischen Gesichtspunkten Rechnung tragen. Dies kann, neben einer allgemeinen Optimierung von Herstellprozessen, auch durch den Einsatz von Treibhausgasen, wie Kohlendioxid, als Synthesebausteine erreicht werden. So lässt sich zum Beispiel über die Fixierung von Kohlendioxid insgesamt eine bessere Prozess-Umweltbilanz erhalten. Dieser Weg wird im Bereich der Herstellung von Polyethercarbonaten beschritten und bildet seit mehr als 40 Jahren Stand intensiver Forschung (z. B. Inoue et al, Copolymerization of Carbon Dioxide and Alkylenoxide with Organometallic Compounds; Die Makromolekulare Chemie 130, 210-220, 1969). In einer möglichen Herstellungsvariante werden Polyethercarbonatpolyole durch eine katalytische Umsetzung von Alkylenoxiden und Kohlendioxid in Anwesenheit H-funktioneller Starterverbindungen ("Starter") umgesetzt. Eine allgemeine Reaktionsgleichung hierfür ist in Schema (I) gegeben:

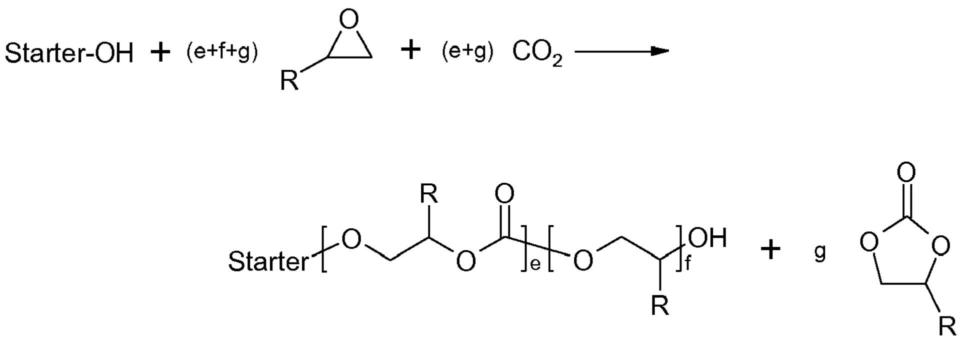

(I)

Als weiteres Produkt, hier ein unerwünschtes Nebenprodukt, entsteht neben dem Polyethercarbonatpolyol ein cyclisches Carbonat (beispielsweise für R=$CH_3$ Propylencarbonat).

Unterschiedliche Ausgestaltungen dieses Verfahrens sind in der Literatur bekannt. So beschreibt zum Beispiel die US 20100048935 A1 ein Verfahren zur Herstellung von Polyethercarbonatpolyolen unter Addition von Alkylenoxiden und Kohlendioxid an H-funktionelle Starterverbindungen unter Verwendung eines DMC-Katalysators. Innerhalb des Verfahrens werden eine oder mehrere Starterverbindungen in einem Reaktor vorgelegt und eine oder mehrere Starterverbindungen anschließend kontinuierlich zur laufenden Reaktion in den Reaktor zudosiert.

Die WO 2006103213 A1 hingegen beschreibt ein Verfahren zur Herstellung von Polyethercarbonatpolyolen mit verbesserten Einbau von $CO_2$ in das Polyethercarbonatpolyol unter Verwendung eines Katalysator aufweisend ein Multimetall-Cyanid. Das Verfahren offenbart die Anwesenheit eines H-funktionellen Starters, eines Alkylenoxids und Kohlendioxid in Gegenwart der Multimetall-Cyanid-Komponente in einem Reaktor. Desweiteren offenbart das Verfahren die Anwesenheit einer $CO_2$-philen Substanz oder $CO_2$-philer Substituenten. Die $CO_2$-phile Substanz oder der $CO_2$-phile Substituent soll den Einbau des $CO_2$ in das Polyethercarbonatpolyol erhöhen und derart die Bildung cyclischer Alkylencarbonate, wie zum Beispiel Propylencarbonat, welche unerwünschte Nebenprodukte darstellen, reduzieren.

Nachteilig an diesen vorgestellten Verfahrensführungen ist allerdings, dass die Umsetzung der Monomere langsam erfolgt und als Reaktionsprodukte relativ hochviskose Polyethercarbonate erhalten werden, welche, bedingt durch ihre hohe Viskosität, sich relativ schlecht weiterverarbeiten lassen. So ist zum Beispiel die weitere Umsetzung dieser im Stand der Technik genannten Polyethercarbonate in weiteren Vernetzungsreaktionen aufgrund Ihrer hohen Viskosität nur bedingt möglich.

Es ist die daher Aufgabe der vorliegenden Erfindung die Nachteile der im Stand der Technik genannten Polyethercarbonate auszuräumen und insbesondere ein Verfahren zur Herstellung niedrigviskoser Polyethercarbonatpolyole bereitzustellen, in dem sich die Monomere mit einer hinreichenden Geschwindigkeit umsetzen und das resultierende Polyethercarbonatpolyol eine besonders niedrige Viskosität aufweist. Desweiteren offenbart die vorliegende Erfindung niederviskose Polyethercarbonatpolyole mit Seitenketten herstellbar nach diesem Verfahren und die Verwendung derselben.

Erfindungsgemäß gelöst wird die Aufgabe durch ein Verfahren zur Herstellung von Polyethercarbonatpolyolen umfassend die Schritte:

(α) Vorlegen eines Katalysators und:

(αα) eines Suspensionsmittels, das keine H-funktionellen Gruppen enthält und/oder
(αβ) einer H-funktionellen Starterverbindung
(γ) Zudosieren von Kohlendioxid und mindestens zweier Alkylenoxide, wobei diese Alkylenoxide von dem im Schritt (β) zudosierten Alkylenoxid oder zudosierten
Alkylenoxiden gleich oder verschieden sein können,

wobei die Differenz des Molekulargewichts des leichtesten und des schwersten der in der Stufe (γ) zudosierten Alkylenoxide größer oder gleich 24 g/mol beträgt und das leichteste Alkylenoxid ein C2-C4-Alkylenoxid ist und wobei weiterhin für den Fall, dass in Schritt (α) keine H-funktionelle Starterverbindung vorgelegt wurde, Schritt (γ) das Zudosieren einer H-funktionellen Starterverbindung umfasst.

Es ist bevorzugt, wenn das Verfahren weiterhin den Schritt (β) zwischen Schritt (α) und Schritt (γ) umfasst:

(β) Zudosieren mindestens eines Epoxides, wobei die Differenz des Molekulargewichts des leichtesten und des schwersten der in den Stufen (β) und (γ) zudosierten Alkylenoxide größer oder gleich 24 g/mol beträgt und das leichteste Alkylenoxid ein C2-C4-Alkylenoxid ist und wobei das oder die in Schritt (γ) zudosierten Epoxide von dem im Schritt (β) zudosierten Epoxid oder zudosierten Epoxiden gleich oder verschieden sein können.

Weiterhin ist es bevorzugt, dass der Katalysator ein DMC-Katalysator ist.

Ausführungsformen der vorliegenden Erfindung werden im Folgenden geschildert. Sie können beliebig miteinander kombiniert werden, sofern sich aus dem Kontext nicht eindeutig das Gegenteil ergibt.

Überraschenderweise wurde gefunden, dass durch die Wahl mindestens zweier Alkylenoxide mit definiertem Molekulargewichtsunterschied, d.h. definiert unterschiedlichen raumgreifenden Resten Rx, im Rahmen der zuvor beschriebenen Reaktion Polyethercarbonatpolyole resultieren, welche sowohl einen geringen Anteil an nicht reagierten Monomeren sowie eine außerordentlich geringe Viskosität aufweisen. Das leichteste zudosierte Alkylenoxid im Sinne der Erfindung ist dabei das Alkylenoxid mit dem geringsten Molekulargewicht, wohingegen das schwerste zugegebene Alkylenoxid das Alkylenoxid mit dem größten Molekulargewicht ist. Die Molekulargewichtsdifferenz beider Alkylenoxide ergibt sich durch einfache Subtraktion der Molekulargewichte (Molekulargewicht des Alkylenoxides mit dem größten Molekulargewicht - Molekulargewicht des Alkylenoxides mit dem kleinsten Molekulargewicht). Ohne durch die Theorie gebunden zu sein verläuft die Reaktion vermutlich im Sinne des Reaktionsschemas II:

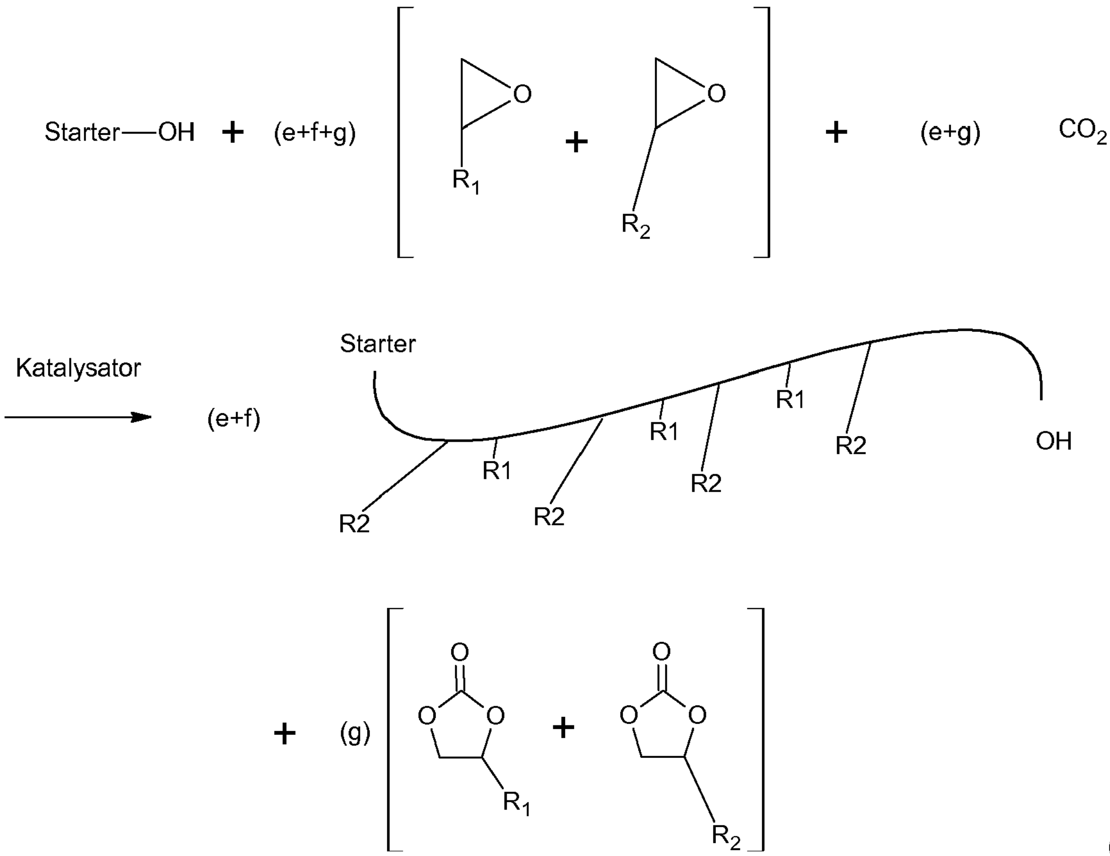


(II),

wobei die schwereren Alkylenoxide durch die Verminderung der intermolekularen Polymer-Polymer Wechselwirkungen die Anordnung der Polyethercarbonatpolyole in Lösung/Schmelze derart stören, sodass eine geringere Viskosität der Polyethercarbonatpolyole erhalten wird. Insbesondere die Terpolymerisation mit definiert gewichtsverschiedenen Alkylenoxiden zeigt diesen Effekt und ist im Vergleich zu einer "einfachen" Polymerisation mit nur einer Monomerspezies deutlich vorteilhafter.

Die obere Grenze des Molekulargewichtsunterschiedes zwischen leichtestem und schwerstem eingesetzten Alkylenoxid kann 950 g/mol, bevorzugt 850 g/mol und weiterhin bevorzugt 400 g/mol betragen. Gerade auch die Wahl des erfindungsgemäßen Molekulargewichtsunterschiedes der Alkylenoxide ermöglicht eine signifikante Reduktion der Viskosität bei einem nur sehr moderaten Anstieg des Molekulargewichtes des Gesamtpolymers. Vorzugsweise beträgt diese Differenz ≥24 g/mol bis ≤950 g/mol, mehr bevorzugt ≥30 g/mol bis 850 g/mol und ganz besonders bevorzugt ≥36 g/mol bis 400 g/mol.

Im Zusammenhang mit der vorliegenden Erfindung bezeichnet der Begriff "niederviskose Polyethercarbonatpolyole" insbesondere solche Polyethercarbonatpolyole, welche eine Viskosität bei 25 °C von weniger als 20'000 mPa·s aufweisen. Die Methode zur Bestimmung der Viskosität ist im experimentellen Teil weiter unten angegeben.

Diese Eigenschaften sind sowohl im Rahmen des Produkthandlings als solchem wie auch im Zuge einer möglichen Weiterverarbeitung, zum Beispiel durch Umsetzung im Rahmen einer weiteren Vernetzungsreaktion, besonders wünschenswert. Höhere Unterschiede im Molekulargewicht des schwersten zum leichtesten Alkylenoxid können zu einer zu starken, d.h. unerwünschten, Erhöhung des Molekulargewichtes der resultierenden Polyethercarbonatpolyole führen, ohne dass ein adäquate Viskositätsabnahme erreicht werden könnte. Anscheinend kann ab einem gewissen Molekulargewichtsunterschied der "Zuwachs" an Störung der intermolekularen Wechselwirkungen nicht mehr die Viskositätserhöhung aufgrund des Molekulargewichtsanstieges kompensieren. Im Vergleich zeigen symmetrisch aufgebaute Moleküle mit drei gleich langen Ketten, die von einer zentralen niedermolekularen Einheit wie beispielsweise Glycerin, ausgehen besonders unvorteilhafte Viskositäten. So beschreibt EP 12181907,2-1301 für ein Polyethercarbonat, das unter Verwendung von Glycerin als trifunktionellem Starter erhalten wurde, eine deutlich erhöhte Viskosität (36,0 Pa·s) im Vergleich mit einem Polyethercarbonat, das unter Verwendung von Dipropylenglykol als bifunktionellem Starter erhalten wurde (4,1 Pa·s). Geringere Molekulargewichtsunterschiede führen hingegen nur zu einer nicht hinreichenden Störung der intermolekularen Wechselwirkungen, sodass keine adäquate Viskositätsabnahme erreichbar ist.

Insbesondere die Kombination des erfindungsgemäßen Molekulargewichtsunterschiedes der eingesetzten Alkylenoxide mit einem zwei- bis dreistufigen Verfahren führt zu einigen Verfahrensvorteilen. Durch die mindestens zweistufige Zugabe der Alkylenoxide kann der Katalysator in einem ersten Schritt vorkonditioniert (aktiviert) werden, welches anschließend zu einer schnelleren und selektiveren Umsetzung zu niedrigviskosen Polyethercarbonatpolyolen führen kann. Ohne durch die Theorie gebunden zu sein kann die anschließende Polymerisationsreaktion mit einem vorkonditionierten Katalysator zudem selektiver erfolgen.

Die explizite technische Ausgestaltung des erfindungsgemäßen Verfahrens kann in mannigfaltiger Weise erfolgen und auf die speziellen Eigenschaften des gewünschten Polymeres abgestimmt werden. So kann zum Beispiel die Reihenfolge der Zugabe des Suspensionsmittels, das keine H-funktionellen Gruppen enthält, der H-funktionellen Starterverbindung oder dem Gemisch aus mindestens zwei H-funktionellen Starterverbindungen und des Katalysators in Schritt (α) und die Zugabe der Monomere und des Kohlendioxids in den Schritten (β) und (γ) variieren. Insbesondere die Menge und der Zeitpunkt der Zugabe der einzelnen Monomerkomponenten kann dabei die Eigenschaften des resultierenden Polyethercarbonatpolyole beeinflussen. So kann die Dosierung der Alkylenoxide

- gemeinsam innerhalb einer Mischung oder jeweils separat,
- als Einzelgabe oder aufgeteilt auf mehrere Dosierschritte,
- in einem konstanten Mengenverhältnis über die gesamte Prozesszeit oder in zeitlich variierenden Konzentrationen

erfolgen. Ebenso kann die Menge, Zeitpunkt und Form der Zugabe des Kohlendioxids zur Mischung variiert werden.

Eine bevorzugte Ausführungsform des erfindungsgemäß einsetzbaren Verfahrens zur Herstellung der Polyethercarbonatpolyole aus einer oder mehreren H-funktionellen Starterverbindungen, mehreren Alkylenoxiden und Kohlendioxid in Gegenwart eines DMC-Katalysators ist dadurch gekennzeichnet, dass

(α) [erste Aktivierungsstufe] ein Suspensionsmittel, das keine H-funktionellen Gruppen enthält, eine H-funktionelle Starterverbindung, ein Gemisch aus einem Suspensionsmittel, das keine H-funktionellen Gruppen enthält und einer H-funktionellen Starterverbindung oder ein Gemisch aus mindestens zwei H-funktionellen Starterverbindungen vorgelegt und gegebenenfalls Wasser und/oder andere leicht flüchtige Verbindungen durch erhöhte Temperatur und/oder reduziertem Druck entfernt werden, wobei der DMC-Katalysator dem Suspensionsmittel, der H-funktionellen Starterverbindung oder dem Gemisch von mindestens zwei H-funktionellen Starterverbindungen vor oder nach der 1. Aktivierungsstufe zugesetzt wird,

(β) [zweite Aktivierungsstufe] eine Teilmenge (bezogen auf die Gesamtmenge der in den Schritten (β) und (γ) eingesetzten Menge an Alkylenoxiden) von einem oder mehreren Alkylenoxiden zu der aus Schritt (α) resultierenden Mischung zugesetzt wird, wobei die Zugabe einer Teilmenge an Alkylenoxiden gegebenenfalls in Gegenwart von $CO_2$ und/oder Inertgas (wie beispielsweise Stickstoff oder Argon) erfolgen kann, und wobei der Schritt (β) auch mehrfach erfolgen kann,

(γ) [Polymerisationsstufe] für den Aufbau einer Polyethercarbonatpolyol-Polymerkette ein Gemisch mehrerer Alkylenoxide mit einer Molekulargewichtsdifferenz des leichtesten zum schwersten von größer oder gleich 24 g/mol und kleiner oder gleich 500 g/mol und das leichteste Alkylenoxid ausgewählt ist aus der Gruppe umfassend C2-C4-Alkylenoxide sowie Kohlendioxid zu der aus Schritt (β) resultierenden Mischung fortwährend zudosiert werden, wobei die für die Terpolymerisation eingesetzten Alkylenoxide gleich oder von den im Schritt (β) eingesetzten Alkylenoxiden verschieden sein können.

<u>Zu Schritt (α):</u>

Die Zugabe der einzelnen Komponenten in Schritt (α) kann gleichzeitig oder nacheinander in beliebiger Reihenfolge erfolgen; bevorzugt wird in Schritt (α) zunächst der DMC-Katalysator vorgelegt und gleichzeitig oder anschließend Suspensionsmittel, das keine H-funktionellen Gruppen enthält, die H-funktionelle Starterverbindung, das Gemisch aus einem Suspensionsmittel, das keine H-funktionellen Gruppen enthält und der H-funktionellen Starterverbindung oder das Gemisch von mindestens zwei H-funktionellen Starterverbindungen zugesetzt. Es können auch mehrere Katalysatoren aus der Gruppe der DMC-Katalysatoren eingesetzt werden.

Gegenstand einer bevorzugten Ausführungsform ist ein Verfahren, wobei in Schritt (α)

(α1) in einem Reaktor der DMC-Katalysator und Suspensionsmittel, das keine H-funktionellen Gruppen enthält, und/oder eine oder mehrere H-funktionelle Starterverbindungen vorgelegt werden,

(α2) durch den Reaktor bei einer Temperatur von 50 bis 200°C, bevorzugt von 80 bis 160°C, besonders bevorzugt

von 125 bis 135°C ein Inertgas (beispielsweise Stickstoff oder ein Edelgas wie Argon), ein Inertgas-Kohlendioxid-Gemisch oder Kohlendioxid geleitet wird und gleichzeitig durch Entfernen des Inertgases oder Kohlendioxids (beispielsweise mit einer Pumpe) ein reduzierter Druck (absolut) von 10 mbar bis 800 mbar, bevorzugt von 40 mbar bis 200 mbar im Reaktor eingestellt wird [erste Aktivierungsstufe].

Gegenstand einer weiteren bevorzugten Ausführungsform ist ein Verfahren, wobei in Schritt (α)

(α1) Suspensionsmittel, das keine H-funktionellen Gruppen enthält, die H-funktionelle Starterverbindung und/oder ein Gemisch aus mindestens zwei H-funktionellen Starterverbindungen, gegebenenfalls unter Inertgasatmosphäre (beispielsweise Stickstoff oder Argon), unter einer Atmosphäre aus Inertgas-Kohlendioxid-Gemisch oder unter einer reinen Kohlendioxid-Atmosphäre, besonders bevorzugt unter einer Inertgasatmosphäre vorgelegt wird und

(α2) in das resultierende Gemisch aus DMC-Katalysator und Suspensionsmittel, das keine H-funktionellen Gruppen enthält, und/oder einer oder mehrerer H-funktioneller Starterverbindungen bei einer Temperatur von 50 bis 200°C, bevorzugt von 80 bis 160°C, besonders bevorzugt von 125 bis 135°C ein Inertgas (beispielsweise Stickstoff oder ein Edelgas wie Argon), ein Inertgas-Kohlendioxid-Gemisch oder Kohlendioxid, besonders bevorzugt Inertgas (beispielsweise Stickstoff oder Argon) eingeleitet und gleichzeitig durch Entfernen des Inertgases oder Kohlendioxids (beispielsweise mit einer Pumpe) ein reduzierter Druck (absolut) von 10 mbar bis 800 mbar, bevorzugt von 40 mbar bis 200 mbar im Reaktor eingestellt wird [erste Aktivierungsstufe],

wobei der Doppelmetallcyanid-Katalysator zu dem Suspensionsmittel, das keine H-funktionellen Gruppen enthält, der H-funktionellen Starterverbindung, dem **Gemisch aus einem** Suspensionsmittel, das keine H-funktionellen Gruppen enthält und der H-funktionellen

Starterverbindung oder dem Gemisch aus mindestens zwei H-funktionellen Starterverbindungen in Schritt (α1) oder unmittelbar anschließend in Schritt (α2) zugesetzt wird.

Der DMC-Katalysator kann in fester Form oder in einem Suspensionsmittel, das keine H-funktionellen Gruppen enthält, oder einer oder mehreren H-funktionellen Starterverbindungen suspendiert zugegeben werden. Wird der DMC-Katalysator als Suspension zugegeben, wird diese bevorzugt in Schritt (α1) dem Suspensionsmittel und/oder der einen oder mehreren H-funktionellen Starterverbindungen zugefügt.

<u>Zu Schritt (β):</u>

Der Schritt (β) der zweiten Aktivierungsstufe kann in Gegenwart von $CO_2$ und/oder Inertgas (wie beispielsweise Stickstoff oder Argon) erfolgen. Bevorzugt erfolgt Schritt (β) unter einer Atmosphäre aus einem Inertgas-Kohlendioxid-Gemisch (beispielsweise Stickstoff-Kohlendioxid oder Argon-Kohlendioxid) oder einer Kohlendioxid-Atmosphäre, besonders bevorzugt unter Kohlendioxid-Atmosphäre. Das Einstellen einer Inertgas-Kohlendioxid-Atmosphäre oder einer Kohlendioxid-Atmosphäre und die Dosierung eines oder mehrerer Alkylenoxide können prinzipiell in unterschiedlicher Weise erfolgen. Der Vordruck wird bevorzugt durch Einleiten von Kohlendioxid eingestellt, wobei der Druck (absolut) 10 mbar bis 100 bar, vorzugsweise 100 mbar bis 50 bar und besonders bevorzugt 500 mbar bis 50 bar beträgt. Der Start der Dosierung des oder der Alkylenoxide kann bei einem beliebig zuvor gewählten Vordruck erfolgen. Der Gesamtdruck (absolut) der Atmosphäre wird in Schritt (β) vorzugsweise im Bereich von 10 mbar bis 100 bar, vorzugsweise 100 mbar bis 50 bar und weiterhin bevorzugt 500 mbar bis 50 bar eingestellt. Gegebenenfalls wird während oder nach der Dosierung des Alkylenoxides der Druck durch Einleiten weiteren Kohlendioxids nachgeregelt, wobei der Druck (absolut) 10 mbar bis 100 bar, vorzugsweise 100 mbar bis 50 bar und bevorzugt 500 mbar bis 50 bar beträgt.

In einer weiteren Ausführungsform kann die bei der Aktivierung in Schritt (β) eingesetzte Menge an einem oder mehreren Alkylenoxiden 0,1 bis 25,0 Gew.%, bevorzugt 1,0 bis 20,0 Gew.%, besonders bevorzugt 2,0 bis 16,0 Gew.%, bezogen auf die im Schritt (α) eingesetzte Menge an Suspensionsmittel, das keine H-funktionellen Gruppen enthält, oder H-funktioneller Starterverbindung betragen. Das Alkylenoxid kann in einem Schritt oder schrittweise in mehreren Teilmengen zugegeben werden.

In einer zusätzlichen Ausführungsform der Erfindung werden bei der Aktivierung in Schritt (β) eine Teilmenge (bezogen auf die Gesamtmenge der in den Schritten (β) und (γ) eingesetzten Menge an Alkylenoxiden) von einem oder mehreren Alkylenoxiden zu der aus Schritt (α) resultierenden Mischung zugesetzt [zweite Aktivierungsstufe]. Diese Zugabe einer Teilmenge an Alkylenoxiden kann gegebenenfalls in Gegenwart von $CO_2$ und/oder Inertgas erfolgen. Der Schritt (β) kann auch mehrfach erfolgen. Der DMC-Katalysator wird vorzugsweise in einer Menge eingesetzt, so dass der Gehalt an DMC-Katalysator im resultierenden Polyethercarbonatpolyol 10 bis 10000 ppm, besonders bevorzugt 20 bis 5000 ppm und höchst bevorzugt 50 bis 500 ppm beträgt.

Im zweiten Aktivierungsschritt kann das oder die Alkylenoxide beispielsweise in einer Portion, innerhalb von 1 bis 15 Minuten oder vorzugsweise innerhalb von 5 bis 10 Minuten zugegeben werden. Die Dauer des zweiten Aktivierungsschritts beträgt bevorzugt 15 bis 240 Minuten, besonders bevorzugt 20 bis 60 Minuten.

Zu Schritt (γ):

Die Dosierung der molekulargewichtsverschiedenen Alkylenoxide sowie des Kohlendioxids kann simultan, wechselweise oder sequentiell erfolgen. Die benötigte Kohlendioxidmenge kann auf einmal oder über die Reaktionszeit dosiert zugegeben werden. Es ist möglich, während der Zugabe der Alkylenoxide den $CO_2$-Druck allmählich oder schrittweise zu steigern oder zu senken oder gleich zu lassen. Vorzugsweise wird der Gesamtdruck während der Reaktion durch eine Nachdosierung an Kohlendioxid konstant gehalten. Die Dosierung des oder der Alkylenoxide und des $CO_2$ kann simultan, wechselweise oder sequentiell zur Kohlendioxid Dosierung erfolgen. Es ist möglich, das oder die Alkylenoxide mit einer konstanten Dosierrate zu dosieren oder die Dosierrate kontinuierlich oder schrittweise zu steigern oder zu senken oder das oder die Alkylenoxide portionsweise zuzugeben. Bevorzugt wird das Alkylenoxid mit konstanter Dosierrate dem Reaktionsgemisch zugegeben. Mehrere Alkylenoxide können einzeln oder als Gemisch zudosiert werden. Die Dosierung der Alkylenoxide kann simultan, wechselweise oder sequentiell über jeweils separate Dosierungen (Zugaben) erfolgen oder über eine oder mehrere Dosierungen, wobei die Alkylenoxide einzeln oder als Gemisch dosiert werden können. Über die Art und/oder Reihenfolge der Dosierung der Alkylenoxide und/oder des Kohlendioxids ist es möglich, statistische, alternierende, blockartige oder gradientenartige niedrigviskose Polyethercarbonatpolyole mit Seitenketten zu synthetisieren.

Vorzugsweise wird ein Überschuss an Kohlendioxid bezogen auf die berechnete Menge an benötigtem Kohlendioxid im Polyethercarbonatpolyol eingesetzt, da bedingt durch die Reaktionsträgheit von Kohlendioxid ein Überschuss von Kohlendioxid von Vorteil ist. Die Menge an Kohlendioxid kann über den Gesamtdruck festgelegt werden. Als Gesamtdruck (absolut) hat sich der Bereich von 0,01 bis 120 bar, bevorzugt 0,1 bis 110 bar, besonders bevorzugt von 1 bis 100 bar für die Copolymerisation zur Herstellung der niedrigviskosen Polyethercarbonatpolyole mit Seitenketten als vorteilhaft erwiesen. Es ist möglich, das Kohlendioxid dem Reaktionsbehälter kontinuierlich oder diskontinuierlich zuzuführen. Dies hängt davon ab, wie schnell die Alkylenoxide und das $CO_2$ verbraucht werden und ob das Produkt gegebenenfalls $CO_2$-freie Polyether-Blöcke oder Blöcke mit unterschiedlichem $CO_2$-Gehalt enthalten soll. Die Konzentration des Kohlendioxids kann bei der Zugabe der Alkylenoxide ebenso variieren. Je nach gewählten Reaktionsbedingungen ist es möglich, das $CO_2$ im gasförmigen, flüssigen oder überkritischen Zustand in den Reaktor einzuleiten. $CO_2$ kann auch als Feststoff in den Reaktor gegeben werden und dann unter den gewählten Reaktionsbedingungen in den gasförmigen, gelösten, flüssigen und/oder überkritischen Zustand übergehen.

In Schritt (γ) kann das Kohlendioxid beispielsweise in die Mischung eingeleitet werden durch

(i) Begasung des Reaktionsgemisches im Reaktor von unten,

(ii) Verwendung eines Hohlwellenrührers,

(iii) eine Kombination aus den Dosierungen gemäß (i) und (ii), und/oder

(iv) Begasung über die Flüssigkeitsoberfläche durch Einsatz mehrstufiger ausgeführter Rührorgane.

Die Begasung des Reaktionsgemisches im Reaktor gemäß (i) erfolgt bevorzugt über einen Begasungsring, eine Begasungsdüse oder über ein Gaseinleitungsrohr. Bei dem Begasungsring handelt es sich vorzugsweise um eine ringförmige Anordnung oder um zwei oder mehrere ringförmige Anordnungen von Begasungsdüsen, die bevorzugt am Boden des Reaktors und/oder an der Seitenwand des Reaktors angeordnet sind.

Der Hohlwellenrührer gemäß (ii) ist bevorzugt ein Rührer, bei dem das Gas über eine hohle Welle des Rührers in die Reaktionsmischung eingeleitet wird. Durch die Drehung des Rührers in der Reaktionsmischung (d.h. beim Mischen) entsteht an dem mit der Hohlwelle verbundenen Ende des Rührflügels ein Unterdruck derart, dass die Gasphase (enthaltend $CO_2$ und ggf. unverbrauchtes Alkylenoxid) aus dem über der Reaktionsmischung befindlichen Gasraum abgesaugt wird und über die Hohlwelle des Rührers in die Reaktionsmischung geleitet wird.

Die Begasung des Reaktionsgemisches gemäß (i), (ii), (iii) oder (iv) kann jeweils mit frisch zudosiertem Kohlendioxid erfolgen und/oder mit einer Absaugung des Gases aus dem Gasraum über der Reaktionsmischung und anschließender Rekompression des Gases kombiniert werden. Beispielsweise wird das aus dem Gasraum über der Reaktionsmischung abgesaugte und komprimierte Gas, gegebenenfalls gemischt mit frischem Kohlendioxid und/oder Alkylenoxid, wieder in das Reaktionsgemisch gemäß (i), (ii), (iii) und/oder (iv) eingeleitet.

Bevorzugt wird der Druckabfall, welcher über Einbau des Kohlendioxids und der Alkylenoxide bei der Terpolymerisation in das Reaktionsprodukt entsteht, über frisch zudosiertes Kohlendioxid ausgeglichen.

Die Einleitung der Alkylenoxide kann separat oder zusammen mit dem $CO_2$ sowohl über die Flüssigkeitsoberfläche oder direkt in die flüssige Phase erfolgen. Bevorzugt erfolgt die Einleitung der Alkylenoxide direkt in die flüssige

Phase, da dies den Vorteil hat, dass eine rasche Durchmischung des eingebrachten Alkylenoxides mit der flüssigen Phase erfolgt und so lokale Konzentrationsspitzen von Alkylenoxiden vermieden werden. Die Einleitung in die flüssige Phase kann über ein oder mehrere Einleitungsrohre, eine oder mehrere Düsen oder eine oder mehrere ringförmige Anordnungen von Mehrfach-Dosierstellen erfolgen, die bevorzugt am Boden des Reaktors und/oder an der Seitenwand des Reaktors angeordnet sind.

Die drei Schritte (α), (β) und (γ) können in demselben Reaktor oder jeweils separat in unterschiedlichen Reaktoren durchgeführt werden. Besonders bevorzugte Reaktortypen sind Rührkessel, Rohrreaktor, und Schlaufenreaktor. Werden die Reaktionsschritte (α), (β) und (γ) in unterschiedlichen Reaktoren durchgeführt, kann für jeden Schritt ein unterschiedlicher Reaktortyp verwendet werden.

Polyethercarbonatpolyole mit Seitenketten können in einem rückvermischten Reaktor, wie einem Rührkessel oder einem Schlaufenreaktor hergestellt werden, wobei der Rührkessel oder Schlaufenreaktor je nach Ausführungsform und Betriebsweise über den Reaktormantel, innen liegende und/oder in einem Umpumpkreislauf befindliche Kühlflächen gekühlt wird. Sowohl in der semi-batch Anwendung, bei der das Produkt erst nach Ende der Reaktion entnommen wird, als auch in der kontinuierlichen Anwendung, bei der das Produkt kontinuierlich entnommen wird, ist besonders auf die Dosiergeschwindigkeit des Alkylenoxides zu achten. Sie ist so einzustellen, dass trotz der inhibierenden Wirkung des Kohlendioxids die Alkylenoxide genügend schnell abreagieren. Die Konzentration an freien Alkylenoxiden in der Reaktionsmischung während der zweiten Aktivierungsstufe (Schritt β) beträgt vorzugsweise > 0 bis < 100 Gew.%, besonders bevorzugt > 0 bis 50 Gew.%, höchst bevorzugt > 0 bis ≤20 Gew.% (jeweils bezogen auf das Gewicht der Reaktionsmischung). Die Konzentration an freien Alkylenoxiden in der Reaktionsmischung während der Reaktion (Schritt γ) beträgt vorzugsweise > 0 bis ≤40 Gew.%, besonders bevorzugt > 0 bis ≤25 Gew.%, höchst bevorzugt > 0 bis ≤15 Gew.% (jeweils bezogen auf das Gewicht der Reaktionsmischung).

Eine weitere Ausführungsform im Rührkessel für die Copolymerisation (Schritt γ) ist dadurch gekennzeichnet, dass auch eine oder mehrere H-funktionelle Starterverbindungen während der Reaktion kontinuierlich in den Reaktor zudosiert werden können. Die Menge der H-funktionellen Starterverbindungen, die während der Reaktion kontinuierlich in den Reaktor zudosiert werden, beträgt bevorzugt mindestens 20 mol% Äquivalente, besonders bevorzugt 70 bis 95 mol% Äquivalente (jeweils bezogen auf die gesamte Menge an H-funktionellen Starterverbindungen). Bei einer kontinuierlichen Durchführung des Verfahrens beträgt die Menge der H-funktionellen Starterverbindungen, die während der Reaktion kontinuierlich in den Reaktor zudosiert werden, bevorzugt mindestens 80 mol% Äquivalente, besonders bevorzugt 95 bis 100 mol% Äquivalente (jeweils bezogen auf die gesamte Menge an H-funktionellen Starterverbindungen).

In einer bevorzugten Ausführungsform wird die gemäß den Schritten (α) und (β) aktivierte Katalysator-Starter-Mischung in demselben Reaktor weiter mit Alkylenoxiden und Kohlendioxid umgesetzt. In einer weiteren bevorzugten Ausführungsform wird die gemäß den Schritten (α) und (β) aktivierte Katalysator-Starter-Mischung in einem anderen Reaktionsbehältnis (beispielsweise einem Rührkessel, Rohrreaktor oder Schlaufenreaktor) weiter mit Alkylenoxiden und Kohlendioxid umgesetzt. In einer weiteren bevorzugten Ausführungsform wird die gemäß dem Schritt (α) vorbereitete Mischung in einem anderen Reaktionsbehältnis (beispielsweise einem Rührkessel, Rohrreaktor oder Schlaufenreaktor) gemäß den Schritten (β) und (γ) mit Alkylenoxiden und Kohlendioxid umgesetzt.

Bei Reaktionsführung in einem Rohrreaktor werden die gemäß Schritt (α) vorbereitete Mischung oder die gemäß der Schritte (α) und (β) aktivierte Mischung und gegebenenfalls Starter sowie Alkylenoxide und Kohlendioxid kontinuierlich durch ein Rohr gepumpt. Bei Verwendung einer gemäß Schritt (α) vorbereiteten Mischung erfolgt die zweite Aktivierungsstufe gemäß Schritt (β) im ersten Teil des Rohrreaktors und die Terpolymerisation gemäß Schritt (γ) im zweiten Teil des Rohrreaktors. Die molaren Verhältnisse der Reaktionspartner können je nach gewünschtem Polymer variieren.

In einer bevorzugten Ausführungsform wird hierbei Kohlendioxid in seiner flüssigen oder überkritischen Form zudosiert, um eine optimale Mischbarkeit der Komponenten zu ermöglichen. Das Kohlendioxid kann am Eingang des Reaktors und/oder über Dosierstellen, die entlang dem Reaktor angeordnet sind, in dem Reaktor eingebracht werden. Eine Teilmenge der Alkylenoxide kann am Eingang des Reaktors eingebracht werden. Die Restmenge der Alkylenoxide wird bevorzugt über mehrere Dosierstellen, die entlang des Reaktors angeordnet sind, in den Reaktor eingebracht. Vorteilhafterweise werden Mischelemente, wie sie zum Beispiel von der Firma Ehrfeld Mikrotechnik BTS GmbH vertrieben werden, zur besseren Durchmischung der Reaktionspartner eingebaut oder Mischer-Wärmetauscherelemente, die gleichzeitig die Durchmischung und Wärmeabfuhr verbessern. Bevorzugt wird durch die Mischelemente zudosiertes $CO_2$ und/oder Alkylenoxide mit der Reaktionsmischung vermischt. In einer alternativen Ausführungsform können verschiedene Volumenelemente der Reaktionsmischung miteinander vermischt werden.

Diskontinuierlich oder kontinuierlich betriebene Rührkessel oder Schlaufenreaktoren können ebenfalls zur Herstellung von niedrigviskosen Polyethercarbonatpolyolen mit Seitenketten verwendet werden. Hierunter fallen im Allgemeinen Reaktoren mit interner und/oder externer Stoffrückführung (ggf. mit im Kreislauf angeordneten Wärmetauscherflächen), wie beispielsweise ein Strahlschlaufenreaktor, Jet-Loop Reaktor oder Venturi-Loop Reaktor, der auch kontinuierlich betrieben werden kann, oder ein schlaufenförmig ausgelegter Rohrreaktor mit geeigneten Vorrichtungen für die Umwälzung der Reaktionsmischung oder eine Schlaufe von mehreren hintereinander geschalteten Rohrreaktoren

oder mehreren hintereinander geschalteten Rührkesseln.

Bei Reaktionsführung in einem kontinuierlich betriebenen Rührkessel oder einem Schlaufenreaktor werden die Reaktanden kontinuierlich durch einen kontinuierlich betriebenen Rührkessel oder einen Schlaufenreaktor gepumpt. Bei Verwendung einer gemäß Schritt (α) vorbereiteten Mischung erfolgt die zweite Aktivierungsstufe gemäß Schritt (β) gleichzeitig zu der Terpolymerisation gemäß Schritt (γ) in dem kontinuierlich betriebenen Rührkessel oder einem Schlaufenreaktor. Die molaren Verhältnisse der Reaktionspartner können je nach gewünschtem Polymer variieren. Der Einsatz eines kontinuierlich betriebene Rührkessel oder Schlaufenreaktors ist insbesondere deshalb von Vorteil, weil hier in Schritt (γ) oder in den Schritten (β) und (γ) eine Rückvermischung realisiert werden kann, so dass die Konzentration an freien Alkylenoxiden in der Reaktionsmischung im optimalen Bereich, vorzugsweise im Bereich > 0 bis ≤40 Gew.%, besonders bevorzugt > 0 bis ≤ 25Gew.%, höchst bevorzugt > 0 bis ≤ 15 Gew.% (jeweils bezogen auf das Gewicht der Reaktionsmischung) gehalten werden kann.

Weiterhin hat der Einsatz eines kontinuierlich betriebenen Rührkessels oder eines Schlaufenreaktors den Vorteil, dass die Seitenketten statistisch mit gleichbleibender Wahrscheinlichkeit in die Polymerkette eingebaut werden, was besonders vorteilhafte Produkteigenschaften wie beispielsweise besonders niedrige Viskositäten ergibt.

Bevorzugt werden die Polyethercarbonatpolyole in einem kontinuierlichen Verfahren hergestellt. Dieses kann sowohl eine kontinuierliche Copolymerisation als auch eine kontinuierliche Zugabe der einen oder mehreren H-funktionellen Startersubstanz(en) umfassen. Gegenstand der Erfindung ist daher auch ein Verfahren wobei in Schritt (γ) eine oder mehrere H-funktionelle Startersubstanz(en), DMC-Katalysator sowie mindestens zwei Alkylenoxid(e), wobei die Differenz des Molekulargewichts des leichtesten und des schwersten der zudosierten Alkylenoxide größer oder gleich 24 g/mol beträgt und das leichteste Alkylenoxid ein C2-C4-Alkylenoxid ist, in Gegenwart von Kohlendioxid ("Copolymerisation") kontinuierlich in den Reaktor dosiert werden und wobei eine Teilmenge des resultierenden Reaktionsgemisches (enthaltend das Reaktionsprodukt) kontinuierlich aus dem Reaktor entfernt wird. Vorzugsweise wird dabei in Schritt (γ) der DMC-Katalysator in H-funktioneller Starterverbindung suspendiert kontinuierlich zugegeben.

Der hier verwendete Begriff "kontinuierlich" kann als Modus der Zugabe eines relevanten Katalysators oder Reaktanden so definiert werden, dass eine im Wesentlichen kontinuierliche wirksame Konzentration des DMC-Katalysators oder des Reaktanden aufrechterhalten wird. Die Katalysatorzufuhr kann echt kontinuierlich oder in relativ eng beabstandeten Inkrementen erfolgen. Gleichermaßen kann eine kontinuierliche Starterzugabe echt kontinuierlich sein oder in Inkrementen erfolgen. Es würde nicht vom vorliegenden Verfahren abweichen, einen DMC-Katalysator oder Reaktanden inkrementell so zuzugeben, dass die Konzentration der zugegebenen Materialien für einige Zeit vor der nächsten inkrementellen Zugabe im Wesentlichen auf null abfällt. Es ist jedoch bevorzugt, dass die DMC-Katalysatorkonzentration während des Hauptteils des Verlaufs der kontinuierlichen Reaktion im Wesentlichen auf derselben Konzentration gehalten wird und dass Startersubstanz während des Hauptteils des Copolymerisations-Verfahrens vorhanden ist. Eine inkrementelle Zugabe von DMC-Katalysator und/oder Reaktanten, die die Beschaffenheit des Produkts nicht wesentlich beeinflusst, ist in demjenigen Sinn, in dem der Begriff hier verwendet wird, dennoch "kontinuierlich". Es ist beispielsweise machbar, eine Rückführungsschleife bereitzustellen, in der ein Teil der reagierenden Mischung zu einem vorherigen Punkt im Verfahren zurückgeführt wird, wodurch durch inkrementelle Zugaben bewirkte Diskontinuitäten geglättet werden.

Um einen vollständigen Umsatz zu realisieren, kann dem Reaktionsapparat, in dem der Schritt (γ) durchgeführt wird, häufig ein weiterer Kessel oder ein Rohr ("Verweilrohr") nachgeschaltet werden, in dem nach der Reaktion vorhandene Restkonzentrationen freier Alkylenoxide abreagieren. Bevorzugt liegt der Druck in diesem nachgeschalteten Reaktor bei demselben Druck wie in dem Reaktionsapparat, in dem der Reaktionsschritt (γ) durchgeführt wird. Der Druck in dem nachgeschalteten Reaktor kann jedoch auch höher oder niedriger gewählt werden. In einer weiteren bevorzugten Ausführungsform wird das Kohlendioxid nach dem Reaktionsschritt (γ) ganz oder teilweise abgelassen und der nachgeschaltete Reaktor bei Normaldruck oder einem geringen Überdruck betrieben. Die Temperatur in dem nachgeschalteten Reaktor liegt bevorzugt bei 10 bis 150°C und besonders bevorzugt bei 20 bis 100°C. Das Reaktionsgemisch kann am Ende der Nachreaktionszeit bzw. am Ausgang des nachgeschalteten Reaktors vorzugsweise weniger als 0,05 Gew.% Alkylenoxide enthalten. Die Nachreaktionszeit bzw. die Verweilzeit im nachgeschalteten Reaktor beträgt bevorzugt 10 min bis 24 h, besonders bevorzugt 10 min bis 3 h.

Die Suspensionsmittel, die in Schritt (α) zum Suspendieren des Katalysators eingesetzt werden, enthalten keine H-funktionellen Gruppen. Als Suspensionsmittel sind alle polar-aprotischen, schwach polar-aprotischen und unpolar-aprotischen Lösungsmittel geeignet, die jeweils keine H-funktionellen Gruppen enthalten. Als Suspensionsmittel können auch eine Mischung aus zwei oder mehrerer dieser Suspensionsmittel eingesetzt werden. Beispielhaft seien an dieser Stelle folgende polar-aprotischen Lösungsmittel genannt: 4-Methyl-2-oxo-1,3-dioxolan (im Folgenden auch als cyclisches Propylencarbonat bezeichnet), 1,3-Dioxolan-2-on, Aceton, Methylethylketon, Acetonitril, Nitromethan, Dimethylsulfoxid, Sulfolan, Dimethylformamid, Dimethylacetamid und *N*-Methylpyrrolidon. Zu der Gruppe der unpolar- und schwach polar-aprotischen Lösungsmittel zählen z.B. Ether, wie z.B. Dioxan, Diethylether, Methyl-tert-Butylether und Tetrahydrofuran, Ester, wie z.B. Essigsäureethylester und Essigsäurebutylester, Kohlenwasserstoffe, wie z.B. Pentan, n-Hexan, Benzol und alkylierte Benzolderivate (z.B. Toluol, Xylol, Ethylbenzol) und chlorierte Kohlenwasserstoffe,

wie z.B., Chloroform, Chlorbenzol, Dichlorbenzol und Tetrachlorkohlenstoff. Bevorzugt als Suspensionsmittel werden 4-Methyl-2-oxo-1,3-dioxolan, 1,3-Dioxolan-2-on, Toluol, Xylol, Ethylbenzol, Chlorbenzol und Dichlorbenzol sowie Mischungen zweier oder mehrerer dieser Suspensionsmittel eingesetzt, besonders bevorzugt ist 4-Methyl-2-oxo-1,3-dioxolan und 1,3-Dioxolan-2-on oder eine Mischung aus 4-Methyl-2-oxo-1,3-dioxolan und 1,3-Dioxolan-2-on.

In einer alternativen Ausführungsform werden als Suspensionsmittel, die in Schritt ($\alpha$) zum Suspendieren des Katalysators eingesetzt werden, eine oder mehrere Verbindung(en) ausgewählt aus der Gruppe bestehend aus aliphatischen Lactonen, aromatischen Lactonen, Lactiden, cyclischen Carbonaten mit mindestens drei gegebenenfalls substituierten Methylengruppen zwischen den Sauerstoffatomen der Carbonatgruppe, aliphatischen cyclischen Anhydriden und aromatischen cyclischen Anhydriden. Ohne an eine Theorie gebunden zu sein, werden solche Suspensionsmittel im späteren Verlauf der Polymerisationsverlauf in Gegenwart eines Starters in die Polymerkette eingebaut. Dadurch entfallen nachgelagerte Reinigungsschritte.

Aliphatische oder aromatische Lactone sind cyclische Verbindungen enthaltend eine Esterbindung im Ring. Bevorzugte Verbindungen sind 4-gliedrige Ringlactone wie $\beta$-Propiolacton, $\beta$-Butyrolacton, $\beta$-Isovalerolacton, $\beta$-Caprolacton, $\beta$-Isocaprolacton, $\beta$-Methyl-$\beta$-valerolacton, 5-gliedrige Ringlactone, wie $\gamma$-Butyrolacton, $\gamma$-Valerolacton, 5-Methylfuran-2(3H)-on, 5-Methylidenedihydrofuran-2(3H)-on, 5-Hydroxyfuran-2(5H)-on, 2-Benzofuran-1(3H)-on und 6-Methy-2-benzofuran-1(3H)-on, 6-gliedrige Ringlactone, wie $\delta$-Valerolacton, 1,4-Dioxan-2-on, Dihydrocumarin, 1H-Isochromen-1-on, 8H-pyrano[3,4-b]pyridine-8-on, 1,4-Dihydro-3H-isochromen-3-on, 7,8-Dihydro-5H-pyrano[4,3-b]pyridine-5-on, 4-Methyl-3,4-dihydro-1H-pyrano[3,4-b]pyridine-1-on, 6-Hydroxy-3,4-dihydro-1H-isochromen-1-on, 7-Hydroxy-3,4-dihydro-2H-chromen-2-on, 3-Ethyl-1H-isochromen-1-on, 3-(Hydroxymethyl)-1H-isochromen-1-on, 9-Hydroxy-1H,3H-benzo[de]isochromen-1-on, 6,7-Dimethoxy-1,4-dihydro-3H-isochromen-3-on und 3-Phenyl-3,4-dihydro-1H-isochromen-1-on, 7-gliedrige Ringlactone, wie $\varepsilon$-Caprolacton, 1,5-Dioxepan-2-on, 5-Methyloxepan-2-on, Oxepane-2,7-dion, thiepan-2-on, 5-Chlorooxepan-2-on, (4*S*)-4-(Propan-2-yl)oxepan-2-on, 7-Butyloxepan-2-on, 5-(4-Aminobuthyl)oxepan-2-on, 5-Phenyloxepan-2-on, 7-Hexyloxepan-2-on, (5*S*,7*S*)-5-Methyl-7-(propan-2-yl)oxepan-2-on, 4-Methyl-7-(propan-2-yl)oxepan-2-on, und höhergliedrige Ringlactone, wie (7*E*)-Oxacycloheptadec-7-en-2-on.

Lactide sind cyclische Verbindungen enthaltend zwei oder mehr Esterbindungen im Ring. Bevorzugte Verbindungen sind Glycolid (1,4-Dioxan-2,5-dion), L-Lactid (L-3,6-Dimethyl-1,4-dioxan-2,5-dion), D-Lactid, DL-Lactid, Mesolactid und 3-Methyl-1,4-dioxan-2,5-dion, 3-Hexyl-6-methyl-1,4-dioxane-2,5-dione, 3,6-Di(but-3-en-1-yl)-1,4-dioxane-2,5-dion (jeweils einschließlich optisch aktiver Formen). Besonders bevorzugt ist L-Lactid.

Als cyclische Carbonate werden vorzugsweise Verbindungen mit mindestens drei gegebenenfalls substituierten Methylengruppen zwischen den Sauerstoffatomen der Carbonatgruppe eingesetzt. Bevorzugte Verbindungen sind Trimethylencarbonat, Neopentylglykolcarbonat (5,5-Dimethyl-1,3-dioxan-2-on), 2,2,4-Trimethyl-1,3-pentandiolcarbonat, 2,2-Dimethyl-1,3-butandiolcarbonat, 1,3-Butandiolcarbonat, 2-Methyl-1,3-propandiolcarbonat, 2,4-Pentandiolcarbonat, 2-Methyl-butan-1,3-diolcarbonat, TMP-Monoallylethercarbonat, Pentaerythritdiallylethercarbonat, 5-(2-Hydroxyethyl)-1,3-dioxan-2-on, 5-[2-(Benzyloxy)ethyl]-1,3-dioxan-2-on, 4-Ethyl-1,3-dioxolan-2-on, 1,3-Dioxolan-2-on, 5-Ethyl-5-methyl-1,3-dioxan-2-on, 5,5-Diethyl-1,3-dioxan-2-on, 5-Methyl-5-propyl-1,3-dioxan-2-on, 5-(Phenylamino)-1,3-dioxan-2-on und 5,5-Dipropyl-1,3-dioxan-2-on. Besonders bevorzugt sind Trimethylencarbonat und Neopentylglykolcarbonat.

Cyclische Carbonate mit weniger als drei gegebenenfalls substituierten Methylengruppen zwischen den Sauerstoffatomen der Carbonatgruppe werden unter den Bedingungen des erfindungsgemäßen Verfahrens zur Copolymerisation von Epoxiden und $CO_2$ nicht oder nur zu einem geringen Anteil in die Polymerkette eingebaut.

Cyclische Carbonate mit weniger als drei gegebenenfalls substituierten Methylengruppen zwischen den Sauerstoffatomen der Carbonatgruppe können jedoch gemeinsam mit anderen Suspensionsmitteln eingesetzt werden. Bevorzugte cyclische Carbonate mit weniger als drei gegebenenfalls substituierten Methylengruppen zwischen den Sauerstoffatomen der Carbonatgruppe sind Ethylencarbonat, Propylencarbonat, 2,3-Butandiolcarbonat, 2,3-Pentandiolcarbonat, 2-Methyl-1,2-propandiolcarbonat, 2,3-Dimethyl-2,3-butandiolcarbonat.

Cyclische Anhydride sind cyclische Verbindungen enthaltend eine Anhydridgruppe im Ring eingesetzt. Bevorzugte Verbindungen sind Succinsäureanhydrid, Maleinsäureanhydrid, Phthalsäureanhydrid, 1,2-Cyclohexandicarbonsäureanhydrid, Diphensäureanhydrid, Tetrahydrophthalsäureanhydrid, Methyltetrahydrophthalsäureanhydrid, Norbornendisäureanhydrid und ihre Chlorierungsprodukte, Bernsteinsäureanhydrid, Glutarsäureanhydrid, Diglykolsäureanhydrid, 1,8-Naphthalsäureanhydrid, Bernsteinsäureanhydrid, Dodecenylbernsteinsäureanhydrid, Tetradecenylbernsteinsäureanhydrid, Hexadecenylbernsteinsäureanhydrid, Octadecenylbernsteinsäureanhydrid, 3- und 4-Nitrophthalsäureanhydrid, Tetrachlorphthalsäureanhydrid, Tetrabromphthalsäureanhydrid, Itaconsäureanhydrid, Dimethylmaleinsäureanhydrid, Allylnorbornendisäureanhydrid, 3-Methylfuran-2,5-dion, 3-Methyldihydrofuran-2,5-dion, Dihydro-2H-pyran-2,6(3H)-dion, 1,4-Dioxane-2,6-dion, 2H-Pyran-2,4,6(3H,5H)-trion, 3-Ethyldihydrofuran-2,5-dion, 3-Methoxydihydrofuran-2,5-dion, 3-(Prop-2-en-1-yl)dihydrofuran-2,5-dion, N-(2,5-Dioxotetrahydrofuran-3-yl)formamid und 3[(2E)-But-2-en-1-yl]dihydrofuran-2,5-dion. Besonders bevorzugt sind Succinsäureanhydrid, Maleinsäureanhydrid und Phthalsäureanhydrid.

Für den Aufbau der Polymerketten der niedrigviskosen Polyethercarbonatpolyole werden H-funktionelle Starterverbindungen (Starter) mit für die Alkoxylierung aktiven H-Atomen eingesetzt. Für die Alkoxylierung aktive Gruppen

mit aktiven H-Atomen sind beispielsweise -OH, $-NH_2$ (primäre Amine), -NH- (sekundäre Amine), -SH und $-CO_2H$, bevorzugt sind -OH und $-NH_2$, besonders bevorzugt ist -OH. Als H-funktionelle Starterverbindung werden beispielsweise eine oder mehrere Verbindungen ausgewählt aus der Gruppe bestehend aus ein- oder mehrwertigen Alkoholen, mehrwertigen Aminen, mehrwertigen Thiolen, Aminoalkoholen, Thioalkoholen, Hydroxyestern, Polyetherpolyolen, Polyesterpolyolen, Polyesteretherpolyolen, Polyethercarbonatpolyolen, Polycarbonatpolyolen, Polycarbonaten, Polyethyleniminen, Polyetheraminen (z. B. sogenannte Jeffamine® von Huntsman, wie z. B. D-230, D-400, D-2000, T-403, T-3000, T-5000 oder entsprechende Produkte der BASF, wie z. B. Polyetheramin D230, D400, D200, T403, T5000), Polytetrahydrofuranen (z. B. PolyTHF® der BASF, wie z. B. PolyTHF® 250, 650S, 1000, 1000S, 1400, 1800, 2000), Polytetrahydrofuranaminen (BASF Produkt Polytetrahydrofuranamin 1700), Polyetherthiolen, Polyacrylatpolyolen, das Mono- oder Diglycerid von Ricinolsäure, Monoglyceride von Fettsäuren, chemisch modifizierte Mono-, Di- und/oder Triglyceride von Fettsäuren, und $C_1$-$C_{24}$ Alkyl-Fettsäureester, die im Mittel 2 OH-Gruppen pro Molekül enthalten, eingesetzt. Beispielhaft handelt es sich bei den $C_1$-$C_{24}$ Alkyl-Fettsäureester, die im Mittel 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Starterverbindungen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-*tert*-Butoxy-2-propanol., 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, *tert*-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Starterverbindungen können zweiwertige Alkohole (wie beispielweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentandiol, Methylpentandiole (wie beispielweise 3-Methyl-1,5-pentandiol), 1,6-Hexandiol, 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole, sowie alle Modifizierungsprodukte dieser zuvorgenannten Alkohole mit unterschiedlichen Mengen an ε-Caprolacton geeignet sein.

Die H-funktionellen Starterverbindungen können auch aus der Substanzklasse der Polyetherpolyole ausgewählt sein, insbesondere solchen mit einem Molekulargewicht $M_n$ im Bereich von 100 bis 4000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®-Baygal®-, PET®- und Polyether-Polyole der Bayer MaterialScience AG (wie z. B. Desmophen® 3600Z, Desmophen® 1900U, Acclaim® Polyol 2200, Acclaim® Polyol 4000I, Arcol® Polyol 1004, Arcol® Polyol 1010, Arcol® Polyol 1030, Arcol® Polyol 1070, Baycoll® BD 1110, Bayfill® VPPU 0789, Baygal® K55, PET® 1004, Polyether® S180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

Die H-funktionellen Starterverbindungen können auch aus der Substanzklasse der Polyesterpolyole ausgewählt sein, insbesondere solche mit einem Molekulargewicht $M_n$ im Bereich von 200 bis 4500 g/mol. Als Polyesterpolyole können mindestens difunktionelle Polyester eingesetzt werden. Bevorzugt bestehen Polyesterpolyole aus alternierenden Säure- und Alkoholeinheiten. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydride eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol oder Gemische aus den genannten Alkoholen verwendet. Werden als Alkoholkomponente zweiwertige Polyetherpolyole eingesetzt, so erhält man Polyesteretherpolyole die ebenfalls als Starterverbindungen zur Herstellung der Polyethercarbonatpolyole dienen können. Bevorzugt werden Polyetherpolyole mit $M_n$ = 150 bis 2000 g/mol zur Herstellung der Polyesteretherpolyole eingesetzt.

Desweiteren können als H-funktionelle Starterverbindungen Polycarbonatdiole eingesetzt werden, insbesondere solche mit einem Molekulargewicht $M_n$ im Bereich von 150 bis 4500 g/mol, vorzugsweise 500 bis 2500 g/mol, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z. B. in der EP-A 1359177. Beispielsweise können als Polycarbonatdiole die Desmophen® C-Typen der Bayer MaterialScience AG verwendet werden, wie z. B. Desmophen® C 1100 oder Desmophen® C 2200.

In einer weiteren Ausführungsform der Erfindung können Polyethercarbonatpolyole und/oder Polyetherestercarbonatpolyole als H-funktionelle Starterverbindungen eingesetzt werden. Insbesondere können Polyetherestercarbonatpolyole, die nach dem hier beschriebenen erfindungsgemäß einsetzbaren Verfahren erhältlich sind, eingesetzt werden. Diese als H-funktionelle Starterverbindungen eingesetzten Polyetherestercarbonatpolyole werden hierzu in einem separaten Reaktionsschritt zuvor hergestellt.

Die H-funktionellen Starterverbindungen weisen im Allgemeinen eine OH-Funktionalität (d.h. Anzahl an für die Polymerisation aktiven H-Atomen pro Molekül) von 0,8 bis 3, bevorzugt von 0,9 bis 2,1 und besonders bevorzugt von 0,95 bis 2,05 auf. Die H-funktionellen Starterverbindungen werden entweder einzeln oder als Gemisch aus mindestens zwei H-funktionellen Starterverbindungen eingesetzt.

Bevorzugte H-funktionelle Starterverbindungen sind Alkohole mit einer Zusammensetzung nach der allgemeinen Formel (III),

$$HO\text{-}(CH_2)_x\text{-}OH \qquad (III)$$

wobei x eine Zahl von 1 bis 20, bevorzugt eine ganze Zahl von 2 bis 20 ist. Beispiele für Alkohole gemäß Formel (III) sind Ethylenglykol, 1,4-Butandiol, 1,6-Hexandiol, 1,8-Octandiol, 1,10 Decandiol und 1,12-Dodecandiol. Weitere bevorzugte H-funktionelle Starterverbindungen sind Neopentylglykol und Umsetzungsprodukte der Alkohole gemäß Formel (III) mit ε-Caprolacton. Weiterhin bevorzugt werden als H-funktionelle Starterverbindungen Wasser, Diethylenglykol, Dipropylenglykol und Polyetherpolyole, aufgebaut aus sich wiederholenden Polyalkylenoxideinheiten, eingesetzt.

Besonders bevorzugt handelt es sich bei den H-funktionellen Starterverbindungen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, Diethylenglykol, Dipropylenglykol, difunktionelle Polyetherpolyole, wobei das Polyetherpolyol aus einer di-H-funktionellen Starterverbindung und Propylenoxid bzw. einer di-H-funktionellen Starterverbindung, Propylenoxid und Ethylenoxid aufgebaut ist. Die Polyetherpolyole weisen bevorzugt eine OH-Funktionalität von 0,9 bis 2,1 und ein Molekulargewicht $M_n$ im Bereich von 62 bis 4500 g/mol und insbesondere ein Molekulargewicht $M_n$ im Bereich von 62 bis 3000 g/mol auf.

Als Katalysator für die Herstellung der erfindungsgemäßen niedrigviskosen Polyethercarbonatpolyole mit Seitenketten wird, wie gesagt, vorzugsweise ein DMC-Katalysator (Doppel-Metall-cyanid-Katalysator) eingesetzt. Es können zusätzlich oder alternativ auch andere Katalysatoren für die Copolymerisation von Alkylenoxiden und $CO_2$ aktiven Katalysatoren, wie beispielsweise Zink-Carboxylate oder Kobalt-Salen-Komplexe eingesetzt werden. Geeignete Zink-Carboxylate sind beispielsweise Zinksalze von Carbonsäuren, insbesondere Dicarbonsäuren, wie Adipinsäure oder Glutarsäure. Eine Übersicht über die bekannten Katalysatoren für die Copolymerisation von Alkylenoxiden und $CO_2$ gibt zum Beispiel Chemical Communications 47(2011)141-163.

Die in dem erfindungsgemäßen Verfahren vorzugsweise einsetzbaren DMC-Katalysatoren enthaltenen Doppelmetallcyanid-Verbindungen sind die Reaktionsprodukte wasserlöslicher Metallsalze und wasserlöslicher Metallcyanidsalze.

Doppelmetallcyanid (DMC)-Katalysatoren sind aus dem Stand der Technik zur Homopolymerisation von Alkylenoxiden bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086 A1, WO 98/16310 A1 und WO 00/47649 A1 beschrieben sind, besitzen eine sehr hohe Aktivität und ermöglichen die Herstellung von Polyethercarbonatpolyolen bei sehr geringen Katalysatorkonzentrationen. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert-Butanol) noch einen Polyether mit einem zahlenmittlerem Molekulargewicht größer als 500 g/mol enthalten.

Die erfindungsgemäß einsetzbaren DMC-Katalysatoren werden vorzugsweise erhalten, indem man

(a) im ersten Schritt eine wässrige Lösung eines Metallsalzes mit der wässrigen Lösung eines Metallcyanidsalzes in Gegenwart eines oder mehrerer organischer Komplexliganden, z.B. eines Ethers oder Alkohols, umsetzt,

(b) wobei im zweiten Schritt der Feststoff aus der aus (a) erhaltenen Suspension durch bekannte Techniken (wie Zentrifugation oder Filtration) abgetrennt wird,

(c) wobei gegebenenfalls in einem dritten Schritt der isolierte Feststoff mit einer wässrigen Lösung eines organischen

Komplexliganden gewaschen wird (z.B. durch Resuspendieren und anschließende erneute Isolierung durch Filtration oder Zentrifugation),

(d) wobei anschließend der erhaltene Feststoff, gegebenenfalls nach Pulverisierung, bei Temperaturen von im allgemeinen 20 - 120°C und bei Drücken von im Allgemeinen 0,1 mbar bis Normaldruck (1013 mbar) getrocknet wird,

und wobei im ersten Schritt oder unmittelbar nach der Ausfällung der Doppelmetallcyanidverbindung (zweiter Schritt) ein oder mehrere organische Komplexliganden, vorzugsweise im Überschuss (bezogen auf die Doppelmetallcyanidverbindung) und gegebenenfalls weitere komplexbildende Komponenten zugesetzt werden.

Die in den erfindungsgemäß einsetzbaren DMC-Katalysatoren enthaltenen Doppelmetallcyanid-Verbindungen sind die Reaktionsprodukte wasserlöslicher Metallsalze und wasserlöslicher Metallcyanidsalze.

Beispielsweise wird eine wässrige Zinkchlorid-Lösung (bevorzugt im Überschuss bezogen auf das Metallcyanidsalz) und Kaliumhexacyanocobaltat gemischt und anschließend Dimethoxyethan (Glyme) oder tert-Butanol (vorzugsweise im Überschuss, bezogen auf Zinkhexacyanocobaltat) zur gebildeten Suspension gegeben.

Zur Herstellung der Doppelmetallcyanid-Verbindungen geeignete Metallsalze weisen bevorzugt eine Zusammensetzung nach der allgemeinen Formel (IV) auf,

$$M(X)_n \qquad (IV)$$

wobei
M ausgewählt ist aus den Metallkationen $Zn^{2+}$, $Fe^{2+}$, $Ni^{2+}$, $Mn^{2+}$, $Co^{2+}$, $Sr^{2+}$, $Sn^{2+}$, $Pb^{2+}$ und, $Cu^{2+}$, bevorzugt ist M $Zn^{2+}$, $Fe^{2+}$, $Co^{2+}$ oder $Ni^{2+}$,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
n ist 1, wenn X = Sulfat, Carbonat oder Oxalat ist und
n ist 2, wenn X = Halogenid, Hydroxid, Carboxylat, Cyanat, Thiocyanat, Isocyanat, Isothiocyanat oder Nitrat ist,
oder geeignete Metallsalze weisen eine Zusammensetzung nach der allgemeinen Formel (V) auf,

$$M_r(X)_3 \qquad (V)$$

wobei
M ausgewählt ist aus den Metallkationen $Fe^{3+}$, $Al^{3+}$, $Co^{3+}$ und $Cr^{3+}$,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
r ist 2, wenn X = Sulfat, Carbonat oder Oxalat ist und
r ist 1, wenn X = Halogenid, Hydroxid, Carboxylat, Cyanat, Thiocyanat, Isocyanat, Isothiocyanat oder Nitrat ist,
oder geeignete Metallsalze weisen eine Zusammensetzung nach der allgemeinen Formel (VI) auf,

$$M(X)_s \qquad (VI)$$

wobei
M ausgewählt ist aus den Metallkationen $Mo^{4+}$, $V^{4+}$ und $W^{4+}$
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
s ist 2, wenn X = Sulfat, Carbonat oder Oxalat ist und
s ist 4, wenn X = Halogenid, Hydroxid, Carboxylat, Cyanat, Thiocyanat, Isocyanat, Isothiocyanat oder Nitrat ist,
oder geeignete Metallsalze weisen eine Zusammensetzung nach der allgemeinen Formel (VII) auf,

$$M(X)_t \qquad (VII)$$

wobei
M ausgewählt ist aus den Metallkationen $Mo^{6+}$ und $W^{6+}$
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;

t ist 3, wenn X = Sulfat, Carbonat oder Oxalat ist und
t ist 6, wenn X = Halogenid, Hydroxid, Carboxylat, Cyanat, Thiocyanat, Isocyanat, Isothiocyanat oder Nitrat ist.

Beispiele geeigneter Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Eisen(III)chlorid, Cobalt(II)chlorid, Cobalt(II)thiocyanat, Nickel(II)chlorid und Nickel(II)nitrat. Es können auch Mischungen verschiedener Metallsalze eingesetzt werden.

Zur Herstellung der Doppelmetallcyanid-Verbindungen geeignete Metallcyanidsalze weisen bevorzugt eine Zusammensetzung nach der allgemeinen Formel (VIII) auf,

$$(Y)_a\ M'(CN)b\ (A)_c \qquad (VIII)$$

wobei
M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II),
Y ausgewählt ist aus einem oder mehreren Metallkationen der Gruppe bestehend aus Alkalimetall (d.h. $Li^+$, $Na^+$, $K^+$, $Rb^+$) und Erdalkalimetall (d.h. $Be^{2+}$, $Mg^{2+}$, $Ca^{2+}$, $Sr^{2+}$, $Ba^{2+}$),
A ausgewählt ist aus einem oder mehreren Anionen der Gruppe bestehend aus Halogenide (d.h. Fluorid, Chlorid, Bromid, Iodid), Hydroxid, Sulfat, Carbonat, Cyanat, Thiocyanat, Isocyanat, Isothiocyanat, Carboxylat, Azid, Oxalat oder Nitrat und
a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Natriumhexacyanocobaltat(III), Kaliumhexacyanocobaltat(III), Kaliumhexacyanoferrat(II), Kaliumhexacyanoferrat(III), Calciumhexacyanocobaltat(III) und Lithiumhexacyanocobaltat(III).

Bevorzugte Doppelmetallcyanid-Verbindungen, die in den erfindungsgemäß einsetzbaren DMC-Katalysatoren enthalten sind, sind Verbindungen mit einer Zusammensetzungen nach der allgemeinen Formel (IX),

$$M_x[M'_{x'}(CN)y]_z \qquad (IX)$$

worin M wie in Formel (IV) bis (VII) und
M' wie in Formel (IIX) definiert ist, und
x, x', y und z sind ganzzahlig und so gewählt, dass die Elektronenneutralität der Doppelmetallcyanidverbindung gegeben ist.
Vorzugsweise ist
x=3,x'=1,y=6undz=2,
M = Zn(II), Fe(II), Co(II) oder Ni(II) und
M' = Co(III), Fe(III), Cr(III) oder Ir(III).

Beispiele geeigneter Doppelmetallcyanidverbindungen a) sind Zinkhexacyanocobaltat(III), Zinkhexacyanoiridat(III), Zinkhexacyanoferrat(III) und Cobalt(II)hexacyanocobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt verwendet wird Zinkhexacyanocobaltat(III).

Die bei der Herstellung der DMC-Katalysatoren zugesetzten organischen Komplexliganden sind beispielsweise in US 5 158 922 (siehe insbesondere Spalte 6, Zeilen 9 bis 65), US 3 404 109, US 3 829 505, US 3 941 849, EP-A 700 949, EP-A 761 708, JP 4 145 123, US 5 470 813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, *n*-Butanol, *iso*-Butanol, *sek*-Butanol, *tert*-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-tert-butylether, Diethylenglykol-mono-*tert*-butylether, Tripropylenglykol-mono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, tert-Butanol 2-Methyl-3-buten-2-ol, 2-Methyl-3-butin-2-ol, Ethylenglykol-mono-tert-butylether und 3-Methyl-3-oxetan-methanol.

Optional werden in der Herstellung der erfindungsgemäß einsetzbaren DMC-Katalysatoren eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly (acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-coacrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, $\alpha,\beta$-ungesättigten Carbonsäureester oder ionische oberflächen- bzw. grenzflächenaktiven Verbindungen eingesetzt.

Bevorzugt werden bei der Herstellung der erfindungsgemäß einsetzbaren DMC-Katalysatoren die wässrigen Lösungen des Metallsalzes (z.B. Zinkchlorid) im ersten Schritt im stöchiometrischen Überschuss (mindestens 50 Mol-%) bezogen auf das Metallcyanidsalz eingesetzt. Dies entspricht mindestens einem molaren Verhältnis von Metallsalz zu Metallcyanidsalz von 2,25 zu 1,00. Das Metallcyanidsalz (z.B. Kaliumhexacyanocobaltat) wird in Gegenwart des organischen Komplexliganden (z.B. tert-Butanol) umgesetzt, wobei sich eine Suspension bildet, die die Doppelmetallcyanid-Verbindung (z.B. Zinkhexacyanocobaltat), Wasser, überschüssiges Metallsalz, und den organischen Komplexliganden enthält.

Der organische Komplexligand kann dabei in der wässrigen Lösung des Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des Metallsalzes und des Metallcyanidsalzes, und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators, wie beispielsweise in WO-A 01/39883 beschrieben.

Im zweiten Schritt erfolgt die Isolierung des Feststoffs (d.h. die Vorstufe des erfindungsgemäßen Katalysators) aus der Suspension durch bekannte Techniken, wie Zentrifugation oder Filtration.

In einer bevorzugten Ausführungsvariante wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem erfindungsgemäßen Katalysator entfernt werden. Bevorzugt liegt die Menge des organischen Komplexliganden in der wässrigen Waschlösung zwischen 40 und 80 Gew.%, bezogen auf die Gesamtlösung.

Optional wird im dritten Schritt der wässrigen Waschlösung eine weitere komplexbildende Komponente, bevorzugt im Bereich zwischen 0,5 und 5 Gew.%, bezogen auf die Gesamtlösung, zugefügt.

Außerdem ist es vorteilhaft, den isolierten Feststoff mehr als einmal zu waschen. Vorzugsweise wird in einem ersten Waschschritt (c-1) mit einer wässrigen Lösung des ungesättigten Alkohols gewaschen (z.B. durch Resuspendieren und anschließende erneute Isolierung durch Filtration oder Zentrifugation), um auf diese Weise zum Beispiel wasserlösliche Nebenprodukte, wie Kaliumchlorid, aus dem erfindungsgemäßen Katalysator zu entfernen. Besonders bevorzugt liegt die Menge des ungesättigten Alkohols in der wässrigen Waschlösung zwischen 40 und 80 Gew.%, bezogen auf die Gesamtlösung des ersten Waschschritts. In den weiteren Waschschritten (c-2) wird entweder der erste Waschschritt einmal oder mehrmals, vorzugsweise einmal bis dreimal wiederholt, oder vorzugsweise wird eine nicht-wässrige Lösung, wie z.B. eine Mischung oder Lösung aus ungesättigtem Alkohol und weiterer komplexbildender Komponente (bevorzugt im Bereich zwischen 0,5 und 5 Gew.%, bezogen auf die Gesamtmenge der Waschlösung des Schrittes (c-2)), als Waschlösung eingesetzt und der Feststoff damit einmal oder mehrmals, vorzugsweise einmal bis dreimal gewaschen.

Der isolierte und gegebenenfalls gewaschene Feststoff wird anschließend, gegebenenfalls nach Pulverisierung, bei Temperaturen von 20 - 100°C und bei Drücken von 0,1 mbar bis Normaldruck (1013 mbar) getrocknet.

Ein besonders bevorzugtes Verfahren zur Isolierung der erfindungsgemäßen DMC-Katalysatoren aus der Suspension durch Filtration, Filterkuchenwäsche und Trocknung wird zum Beispiel in der WO-A 01/80994 beschrieben.

Bei den Alkylenoxiden mit dem niedrigeren Molekulargewicht handelt es sich bevorzugt um Alkylenoxide mit 2-4 Kohlenstoffatomen. Diese Alkylenoxide werden im folgenden als Alkylenoxide ohne Seitenketten mit den Resten $R_1$ bezeichnet. Dabei kann es sich beispielsweise um eine oder mehrere Verbindungen ausgewählt aus der Gruppe bestehend aus Ethylenoxid, Propylenoxid, 2,3-Butenoxid, 2-Methyl-1,2-propenoxid (Isobutenoxid) handeln. Vorzugsweise können als Alkylenoxide mit dem Alkylenoxidrest $R_1$ Ethylenoxid und/oder Propylenoxid, insbesondere Propylenoxid eingesetzt werden. Insbesondere können die niedermolekularen Alkylenoxide mindestens einen terminalen Oxiran-Ring aufweisen.

Bei den Alkylenoxiden mit dem höheren Molekulargewicht handelt es sich um Alkylenoxide mit einem definierten Molekulargewichtsabstand zu den niedermolekularen Alkylenoxiden, wobei diese Alkylenoxide voluminösere Seitenketten $R_2$ tragen. Diese Monomer-Gruppen mit seitenkettentragende Resten haben sich im Rahmen einer beherrschbaren Prozessführung und als Monomere zum Erhalt polymerer Produkte mit einer besonders niedrigen Viskosität als besonders geeignet erwiesen. Neben den Kohlenstoff- und Wasserstoffatomen können diese Seitenketten auch Heteroatome wie zum Beispiel Si, N, P, O, S und Halogene aufweisen. Die Reste können dabei sowohl gesättigt wie auch ungesättigt, linear oder cyclisch, aromatisch oder aliphatisch sein. Insbesondere können die höhermolekularen Alkylenoxiden mindestens einen terminalen Oxiran-Ring aufweisen.

In einer besonderen Ausführungsform des Verfahrens zur Herstellung der Polyethercarbonatpolyole können niedermolekulare Alkylenoxide mit dem Rest $R_1$ ausgewählt sein aus der Gruppe umfassend H, Methyl. Diese Reste $R_1$ ohne Seitenkette haben sich als besonders vorteilhaft zur Durchführung des erfindungsgemäßen Verfahrens zur Herstellung niedrigviskoser Polyethercarbonatpolyole herausgestellt, da diese Komponenten eine hinreichend große Reaktionsgeschwindigkeit aufweisen und zu einer Kettenverlängerung unter möglichst geringem Zuwachs des Molekulargewichtes des Polymers beitragen.

In einer weiteren Ausgestaltung des Verfahrens zur Herstellung der Polyethercarbonatpolyole kann der DMC-Katalysator ausgewählt sein aus der Gruppe umfassend $M_x[M'_{x'},(CN)_y]_z$, wobei gilt: M = Zn(II), Fe(II), Co(II) oder Ni(II); M' = Co(III), Fe(III), Cr(III) oder Ir(III); und x = 3, x' = 1, y= 6 und z = 2. Diese DMC-Katalysatoren haben sich im Rahmen einer effektiven Prozessführung der Terpolymerisation im Sinne einer hohen Selektivität und eines hohen Umsatzes auch schon bei niedrigeren Temperaturen als besonders vorteilhaft erwiesen. Insbesondere kann auch ein DMC-Katalysator umfassend Zinkhexacyanocobaltat(III) eingesetzt werden.

In einer weiteren Ausgestaltung des Verfahrens zur Herstellung der Polyethercarbonatpolyole kann der Rest $R_2$ des Alkylenoxides mit dem höheren Molekulargewicht ausgewählt sein aus der Gruppe umfassend unverzweigtes oder verzweigtes, gesättigtes oder ungesättigtes, gegebenenfalls Heteroatome umfassendes C2-C60 Alkyl, Cycloalkyl, Alkenyl, Alkinyl, Heteroalkyl, Alkoxy, Aryl, Heteroaryl, Aryloxy, Aralkyl, Alkoxysilyl, Aroxysilyl. Diese Reste haben sich im Rahmen einer beherrschbaren Prozessführung und als Monomere zum Erhalt polymerer Produkte mit einer besonders niedrigen Viskosität als besonders geeignet erwiesen Beispielsweise kann es sich bei den eingesetzten Verbindungen mit dem Rest $R_2$ um eine oder mehrere Verbindungen ausgewählt aus der Gruppe bestehend aus 1-Butenoxid, 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach Alkylenoxidierte Fette als Mono-, Di-und Triglyceride, Alkylenoxidierte Fettsäuren, C1-C24-Ester Alkylenoxidierter Fettsäuren, Epichlorhydrin, Derivate des Glycidols wie beispielsweise Methylglycidylether, Ethylglycidylether, 2-Ethylhexylglycidylether, Allylglycidylether, Glycidylmethacrylat sowie Alkylenoxidfunktionelle Alkyoxysilane wie beispielsweise 3-Glycidyloxy-propyl-trimethoxysilan, 3-Glycidyloxy¬propyl¬triethoxysilan, 3 -Glycidyloxypropyltripropoxysilan, 3-Glycidyloxy¬propyl-methyl-dimethoxysilan, 3-Glycidyl-oxy-propyl-ethyldiethoxysilan, 3-Glycidyl¬oxypropyl¬triiso¬propoxy¬silan handeln.

In einer weiteren Ausgestaltung des erfindungsgemäßen Verfahrens zur Herstellung der Polyethercarbonatpolyole kann die Temperatur im Schritt (β) größer oder gleich 100 °C und kleiner oder gleich 150 °C und im Schritt (γ) größer oder gleich 60 °C und kleiner oder gleich 150 °C betragen. Der Schritt (γ) wird beispielsweise bei Temperaturen von 60 bis 150°C, vorzugsweise von 80 bis 130°C, ganz besonders bevorzugt von 90 bis 120°C durchgeführt. Werden Temperaturen unterhalb von 60°C eingestellt, kommt die Polymerisationsreaktion zum Erliegen. Bei Temperaturen oberhalb von 150°C steigt die Menge an unerwünschten Nebenprodukten stark an. Vorzugsweise liegt die Temperatur im Reaktionsschritt (γ) unterhalb der des Reaktionsschrittes (β). Dies kann zu einer schnellen Aktivierung des Katalysators und zu einer schnellen und selektiven Umsetzung im Rahmen der Polymerisationsreaktion führen.

In einer alternativen Ausführungsform des Verfahren zur Herstellung der Polyethercarbonatpolyole kann der Rest $R_2$ der Alkylenoxide aus der Gruppe der C2-C15 Alkyl oder Alkenyl ausgewählt sein. Gerade der Einsatz gesättigter oder ungesättigter C2-C15 Alkyl-Reste $R_2$ führt im Rahmen des erfindungsgemäßen Prozesses zu einer einfachen Verfahrensführung und einer signifikanten Reduktion der Viskosität der resultierenden Polyethercarbonatpolyole. Beispielverbindungen dieser Verbindungsklasse sind weiter oben angegeben.

In einer weiteren Ausführungsform des Verfahrens zur Herstellung der Polyethercarbonatpolyole kann im Schritt (β) ebenfalls Kohlendioxid zudosiert werden. Gerade die Zudosierung von Kohlendioxid im Reaktionsschritt (β) kann zu einer besseren Aktivierung des DMC-Katalysators führen, welches wiederum im folgenden Polymerisationsschritt (γ) zu einer besseren Ausbeute am gewünschten Hauptprodukt führt.

Gemäß einer weiteren Ausgestaltung des erfindungsgemäßen Verfahrens zur Herstellung der Polyethercarbonatpolyole kann der Rest $R_2$ Alkylenoxide mit dem höheren Molekulargewicht mindestens eine Doppelbindung aufweisen. Durch die Einführung ungesättigter Seitenketten in das Polyethercarbonatpolyol eröffnet sich die Möglichkeiten, diese als Anknüpfungspunkte für eine spätere Vernetzungsreaktionen zu nutzen. Dadurch erhält man neben einem niedrigviskosen, linearen Polyethercarbonatpolyol zudem eines mit Seitenketten, welche sich flexibel und einfach zu weiteren hochmolekularen Verbindungen umsetzen lassen. Beispielverbindungen dieser Verbindungsklasse sind weiter oben angegeben.

In einer weiteren Charakteristik des erfindungsgemäßen Verfahrens zur Herstellung der Polyethercarbonatpolyole kann mindestens eines der in den Stufen (β) und/oder (γ) zudosierten Alkylenoxide eine C2-C15 Alkyl- oder Alkenyl-Gruppe aufweisen. Diese Alkylenoxid-Substituenten sind insbesondere in der Lage eine deutliche Reduzierung der Viskosität der Polyethercarbonatpolyole unter Beibehaltung weiterer, qualitätsrelevanter Parameter, wie Selektivität und Ausbeute zu erreichen.

In einem weiteren Gegenstand des Verfahrens zur Herstellung der Polyethercarbonatpolyole kann mindestens eines der im Schritt (γ) zudosierten Alkylenoxide aus der Gruppe der Glycidylether ausgewählt sein. Glycidylether weisen die allgemeine Formel (X)

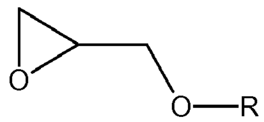

(X)

auf, wobei R ein Heteratom-enthaltender oder nicht Heteroatom-enthaltender C1-C30 aliphatischer, aromatischer, araliphatischer oder cycloaliphatischer Rest ist. Glycidylether führen durch ihre Verwendung im Rahmen der Terpolymerisation zu besonders ausladenden Seitenketten am Polyethercarbonatpolyol, welches als Konsequenz zu einer deutlich verringerten Viskosität beiträgt. Desweiteren ermöglicht die Verwendung von Glycidylether aufgrund ihrer Löslichkeit und Umsetzungsfähigkeit am DMC-Katalysator eine einfache Prozessführung. Einsetzbare Glycidylether sind beispielsweise Allylglycidylether (AGE), p-tert-Butylphenylglycidylether (BPGE), 2-Ethylhexylglycidylether (EHGE), Glycidylphenylether (GPE).

In einer alternativen Ausführungsform des Verfahrens zur Herstellung der Polyethercarbonatpolyole kann das molare Zugabeverhältnis vom leichtesten zum schwersten Alkylenoxid in den Schritten (β) und (γ) insgesamt größer oder gleich 5:1 und kleiner oder gleich 1000:1 betragen. Dieses molekulare Mischungsverhältnis der Alkylenoxide führt zu einer signifikanten Reduktion der Viskosität des Polyethercarbonatpolyols und führt somit zu einer vereinfachten Verarbeitbarkeit des Polymers. Kleinere molare Mischungsverhältnisse der unterschiedlich schweren Alkylenoxide sind nicht erfindungsgemäß, da sie zu durch einen verstärkten Einbau der seitenkettentragenden Alkylenoxide zu einem unnötig hohem Molekulargewicht des Polyethercarbonatpolyols führen würden. Größere molekulare Mischungsverhältnisse sind desweiteren nicht erfindungsgemäß, da diese, mangels Einbau einer signifikanten Menge an $R_2$, zu einer zu geringen Abnahme der Viskosität des Polyethercarbonatpolyols führen würden.

In einer weiteren Ausführungsform des Verfahrens zur Herstellung der Polyethercarbonatpolyole kann im Schritt (β) und/oder (γ) zusätzlich ein cyclisches Anhydrid zugegeben werden. Durch Einbau der cyclischen Anhydride enthält das gebildete Polyethercarbonatpolyol neben den Ethergruppen und den Carbonatgruppen zusätzlich Estergruppen. Über die Zugabe eines cyclischen Anhydrides in den Schritten (β) und/oder (γ) können beispielsweise weitere funktionelle Gruppen in das Polyethercarbonatpolyol eingebaut werden. So werden bei Verwendung ungesättigter cyclischer Anhydride Doppelbindungen entlang der Polymerkette erhalten. In einer bevorzugten Ausführungsform kann das cyclische Anhydrid Maleinsäureanhydrid umfassen.

Desweiteren erfindungsgemäß ist ein Polyethercarbonatpolyol erhältlich nach dem erfindungsgemäßen Verfahren, wobei die Viskosität des Polyethercarbonatpolyols bei 25°C ≥100 mPa·s und ≤20'000 mPa·s, bevorzugt ≥200 mPa·s und ≤ 12'500 mPa·s und ganz besonders bevorzugt ≥500 mPa·s und ≤6'000 mPa·s beträgt. Dieser Viskositätsbereich der Polyethercarbonatpolyole erhältlich aus einer Terpolymerisation aus seitenkettentragenden, nicht seitenkettentragenden Monomeren und Kohlendioxid hat sich für die weitere Verarbeitung der Polyethercarbonatpolyole als besonders vorteilhaft erwiesen. Dies gilt insbesondere für weitere Umsetzungen dieser Polymere zu höhermolekularen Kunstoffen, welche durch den Einsatz besonders niedrigviskoser Edukte verbesserte Eigenschaften aufweisen können. Die Bestimmung der Viskosität des erfindungsgemäßen Polyethercarbonatpolyols wird im Methodenteil beschrieben.

In einer bevorzugten Ausführungsvariante kann das Verhältnis der Carbonatester- zu Ethergruppen im Polyethercarbonatpolyol ≥1:20 und ≤1:1,besonders bevorzugt ≥1:8und ≤1:2 betragen. Dieses Verhältnis der Carbonatester- zu Ethergruppen hat sich im Rahmen der Prozessführung und Prozessökonomie als besonders vorteilhaft erwiesen. Höhere Anteile an Carbonatestergruppen können zu einer erhöhten Viskosität des Polyethercarbonatpolyols führen.

In einer bevorzugten Ausführungsform kann das Molekulargewicht $M_n$ (bestimmt mittels Gelpermeationschromatographie) des Polyethercarbonatpolyols ≥400 und ≤10'000'000g/mol betragen. In einer besonders bevorzugten Ausführungsform kann das Molekulargewicht $M_n$ ≥1000 und ≤1'000'000 g/mol und ganz besonders bevorzugt ≥2000 und ≤10'000 g/mol betragen. Dieser Molekulargewichtsbereich ist im Rahmen des erfindungsgemäßen Verfahrens effizient und ökonomisch darstellbar und die erhaltenen Polyethercarbonatpolyole zeigen im Vergleich zu Polyethercarbonaten gemäß dem Stand der Technik bei vergleichbarem Molekulargewicht eine deutlich verringerte Viskosität. Dies verbessert in hohem Maße die technische Handhabbarkeit der erfindungsgemäßen Polyethercarbonatpolyole.

In einer besonderen erfindungsgemäßen Ausgestaltung kann die OH-Funktionalität des Polyethercarbonatpolyols ≥0,8 und ≤3,0 betragen. Die OH-Funktionalität des Polymers kann, neben der Viskosität, ein wichtiger Parameter zur Einstellung der Reaktivität der Polyethercarbonatpolyole im Rahmen weiterer Umsetzungsreaktionen sein. Die erfindungsgemäßen Polyethercarbonatpolyole mit Seitenketten weisen im Vergleich zu Polyethercarbonatpolyolen ohne Seitenketten eine geringere Viskosität bei gleicher OH-Zahl auf, wodurch die technische Handhabbarkeit verbessert wird.

In einer weiteren Ausführungsform kann der Anteil des in das Polyethercarbonatpolyol eingebauten schwersten Alkylenoxides ≥1 mol-% und ≤20 mol-% betragen. Innerhalb dieses Einsatzbereiches kann eine deutliche Reduzierung der Viskosität des Polyethercarbonatpolyols unter gleichzeitiger Beibehaltung einer vorteilhaften Prozessökonomie erreicht werden. Höhere Anteile als 20 mol-% können unvorteilhaft sein, da die erreichbare Viskositätserniedrigung durch diesen zusätzlichen Anteil nicht mehr in einer adäquaten Verringerung der Viskosität durchschlägt. Demzufolge wird das Molekulargewicht erhöht, ohne eine deutliche Viskositätserniedrigung zu erreichen.

In einer bevorzugten Ausführungsvariante des Polyethercarbonatpolyols können die leichtesten und die schwersten Alkylenoxide nicht gleichmäßig innerhalb des Polyethercarbonatpolyols verteilt sein. Mittels des erfindungsgemäßen Verfahrens lassen sich zum einen homogene, symmetrische Terpolymere herstellen, welche zum Beispiel aus einer mittleren Struktureinheit, gebildet aus einem bifunktionellen Startermolekül und zwei daran anknüpfende Struktureinheiten, welche aus Terpolymeren bestehen, gebildet werden (siehe Schema (XI)):

Terpolymer------Starter------Terpolymer (XI)

Zur Herstellung dieser Art der Terpolymere wird während der Polymerisationsstufe die Zusammensetzung der Monomermischung konstant gehalten. Zum anderen lassen sich nach dem erfindungsgemäßen Verfahren prinzipiell auch Block-Terpolymere erhalten, welche zum Beispiel aus einer mittleren Struktureinheit, gebildet aus einem bifunktionellen Startermolekül und daran anknüpfend, jeweils unterschiedlich aufgebauten Terpolymereinheiten bestehen (siehe Schema (XII)).

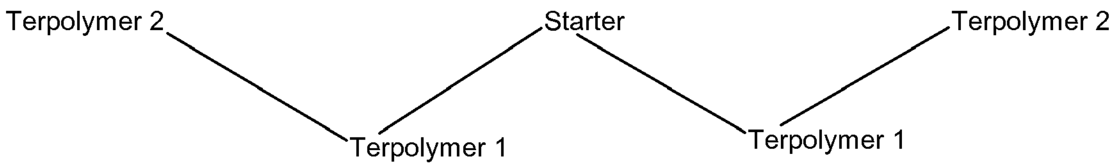


(XII)

Zur Herstellung der Block-Terpolymere kann zum Beispiel während der Polymerisationsstufe die Zusammensetzung der Monomermischung variiert werden. So lassen sich zum Beispiel Abschnitte nur mit und Abschnitte ganz ohne raumgreifende Seitenketten erhalten. Desweiteren sind Gradientenpolymere denkbar, in denen sich der Einbau der unterschiedlichen Monomerspezies im Verlauf der Kette kontinuierlich ändert. Zusätzlich kann natürlich die Änderung der Monomerkonzentration im Prozessverlauf häufiger erfolgen, sodass prinzipiell ein Polymer mit einer beliebigen Anzahl an unterschiedlichen Blöcken synthetisiert werden kann. Diese Flexibilität im Verfahren und in den erfindungsgemäßen Polyethercarbonatpolyolen kann zu einer deutlich besseren Abstimmbarkeit des Polymers und damit der Polymereigenschaften auf seinen beabsichtigten technischen Einsatzeigenschaften führen.

Desweiteren können Polyethercarbonatpolyole gemäß den vorgestellten Ausführungsformen und Ausgestaltungen als vernetzbare Komponente innerhalb einer Vernetzungsreaktion zur Herstellung duromerer oder elastomerer Netzwerke verwendet werden. Geeignete Vernetzungsreaktionen beinhalten beispielsweise die radikalische Vernetzung von ungesättigten Doppelbindungen, die in den erfindungsgemäßen Polyethercarbonatpolyolen enthalten sein können, mit Polythiolen. Eine weitere mögliche Vernetzungsreaktion beinhaltet die Quervernetzung durch photochemische 2+2 Addition von ungesättigten Doppelbindungen, die in den erfindungsgemäßen Polyethercarbonatpolyolen enthalten sein können.

Die erfindungsgemäßen Polyethercarbonatpolyole mit Seitenketten können weiterhin als Starter für weitere Polymerisationsschritte, wie beispielsweise eine nachfolgende Umsetzung mit Alkylenoxiden oder mit Alkylenoxiden und Kohlendioxid eingesetzt werden.

Die erfindungsgemäßen Polyethercarbonatpolyole mit Seitenketten bilden bei der anschließenden Umsetzung der terminalen OH-Gruppen mit difunktionellen Kettenverlängerern, wie z.B. Diisocyanaten, lineare Ketten aus. Die erfindungsgemäßen niedrigviskosen Polyethercarbonatpolyole mit Seitenketten bilden bei der anschließenden Umsetzung mit höherfunktionellen Vernetzungsreagentien, wie z.B. Isocyanaten, Netzwerke aus, die je nachdem ob die Gebrauchstemperatur über oder unter der Glastemperatur liegt, Elastomer- oder Duromercharakter aufweisen. Die Elastomere können nach weiterer Umsetzung zu Formkörpern oder flächigen Gebilden (Beschichtungen, Filme) verarbeitet werden. In all diesen Ausgestaltungen führt die Verwendung von im Vergleich zum Stand der Technik niederviskosen Polyethercarbonatpolyolen zu einer deutlichen Verbesserung der technischen Handhabbarkeit.

In einer erfindungsgemäßen Ausführungsform der obigen Verwendung wird das Polyethercarbonatpolyol daher

mit Di- und/oder Polyisocyanaten umgesetzt. Die nach dem erfindungsgemäßen Verfahren erhältlichen niedrigviskosen Polyethercarbonatpolyole mit Seitenketten können problemlos verarbeitet werden, insbesondere durch Umsetzung mit Di-und/oder Polyisocyanaten zu Polyurethanen, insbesondere zu Polyurethan-Weichschaumstoffen, Polyurethan-Hartschaumstoffen, Polyurethan-Elastomeren oder Polyurethan-Beschichtungen.

Die erfindungsgemäßen niedrigviskosen Polyethercarbonatpolyole mit Seitenketten können weiterhin als interne Weichmacher beispielsweise für PVC und Kautschuke, insbesondere für NBR-und CR-Kautschuke eingesetzt werden. Die Verwendung der erfindungsgemäßen Polyethercarbonatpolyole bei der Herstellung solcher Materialien umfassend as duromere oder elastomere Netzwerke führt zu einer Verbesserung der Werkstoffeigenschaften, wie z.B. erniedrigte Einfriertemperatur, erhöhtes Formveränderungsvermögen, erhöhte elastische Eigenschaften, verringerte Härte, ggf. gesteigertes Haftvermögen und verbesserte Verarbeitbarkeit. Ohne an eine Theorie gebunden zu sein, ist dies auf die Wirkung der Seitenketten als interne Weichmacher zurückzuführen. Für Kautschuke, welche niedrigviskose Polyethercarbonatpolyole als Weichmacher enthalten, bestehen eine Vielzahl von Anwendungsmöglichkeiten im gummitechnischen Bereich, insbesondere als Material für Kabelummantelungen, Schläuche, Dichtungen, Membranen, Schuhsohlen, Bodenbeläge, Dämpfungseinrichtungen. Durch Einsatz solcher interner Weichmacher bleiben die aus den Polyethercarbonatpolyolen hergestellten Materialien dauerhaft weich und es kommt nicht zu einem Ausdiffundieren des Weichmachers.

Demzufolge kann das erfindungsgemäße Polyethercarbonatpolyol in Wasch- und Reinigungsmittelformulierungen, als Weichmacher, Bohrflüssigkeiten, Kraftstoffadditiven, ionischen und nicht-ionischen Tensiden, Schmiermitteln, Prozesschemikalien für die Papier- oder Textilherstellung, kosmetischen Formulierungen oder als Porenbildner bei der Herstellung von Keramiken Verwendung finden. In all diesen Anwendung bietet der Einsatz der Polyethercarbonatpolyole mit Seitenketten Verarbeitungsvorteile im Vergleich zum dem im Stand der Technik genannten Polyethercarbonatpolyolen.

## <u>Beispiele</u>

### Abkürzungen und Substanzen

Eingesetzte H-funktionelle Starterverbindung (Starter):

PET-1 difunktionelles Poly(oxypropylen)polyol mit einer OH-Zahl von 112 $mg_{KOH}/g$

PET-2 symmetrisch aufgebautes trifunktionelles Poly(oxypropylen)polyol mit einer OH-Zahl von 400 $mg_{KOH}/g$ mit Glycerin als zentraler niedermolekularer Einheit

Eingesetzte seitenkettenfreie Alkylenoxide:

PO Propylenoxid

Eingesetzte Alkylenoxide mit Seitenketten:

AGE Allylglycidylether

BPGE *p*-tert-Butylphenylglycidylether

EHGE 2-Ethylhexylglycidylether

GPE Glycidylphenylether

Eingesetztes seitenkettenfreies Comonomer:

MSA Maleinsäureanhydrid

Der DMC-Katalysator wurde nach Beispiel 6 der WO-A O1/80994 hergestellt.

Methoden

OH-Zahl (Hydroxylzahl)

Die OH-Zahl (Hydroxylzahl) wurde in Anlehnung an DIN 53240-2 bestimmt, wobei jedoch *N*-Methylpyrrolidon anstelle von THF/Dichlormethan als Lösemittel verwendet wurde. Es wurde mit 0,5 molarer ethanolischer KOH Lösung titriert und die Endpunktserkennung erfolgte mittels Potentiometrie. Als Prüfsubstanz diente zertifiziertes Rizinusöl. Die Angabe der Einheit in "mg KOH/g" bezieht sich auf mg[KOH]/g[Polyethercarbonatpolyol].

Gelpermeations-Chromatographie

Das Zahlenmittel $M_n$ und das Gewichtsmittel $M_w$ des Molekulargewichts der entstandenen Polyethercarbonatpolyole wurde mittels Gelpermeations-Chromatographie (GPC) bestimmt. Es wurde nach DIN 55672-1: "Gelpermeationschromatographie, Teil 1 - Tetrahydrofuran als Elutionsmittel" vorgegangen (SECurity GPC-System von PSS Polymer Service, Flussrate 1.0 ml/min; Säulen: 2×PSS SDV linear M, 8×300 mm, 5 μm; RID-Detektor). Dabei wurden Polystyrolproben bekannter Molmasse zur Kalibrierung verwendet. Die Polydispersität wurde als das Verhältnis $M_w/M_n$ berechnet.

Rheologie

Die Viskosität des Produktgemisches wurde mit einem Rheometer Physica MCR 501 der Firma Anton Paar bei 25°C bestimmt, wobei eine Kugel-Platte-Konfiguration mit einem Kugeldurchmesser von 25 mm mit einem Abstand von 0,05 mm zwischen Kugel und Platte verwendet wurden. Die Scherrate wurde innerhalb von 10 min von 0,01 auf 1000 1/s gesteigert. Alle 10 s wurde ein Wert genommen. Angegeben ist die Viskosität als der Durchschnitt der insgesamt 60 Messwerte.

$^1$H-NMR Spektroskopie

Die Probe wird in deuteriertem Chloroform gelöst und auf einem Spektrometer der Firma Bruker (AV400, 400 MHz) vermessen.

**Herstellung der Polyethercarbonatpolyole**

Die Polymerisationsreaktionen wurden in einem 300 ml Druckreaktor der Fa. Parr durchgeführt. Der in den Beispielen eingesetzte Druckreaktor hatte eine Höhe (innen) von 10,16 cm und einen Innendurchmesser von 6,35 cm. Der Reaktor war ausgestattet mit einem elektrischen Heizmantel (510 Watt maximale Heizleistung). Die Gegenkühlung bestand in einem U-förmig gebogenen Tauchrohr mit 6 mm Außendurchmesser, das bis 5 mm über den Boden in den Reaktor ragte und das mit Kühlwasser von ca. 10°C durchströmt wurde. Der Wasserstrom wurde über ein Magnetventil ein- und ausgeschaltet. Weiterhin war der Reaktor mit einem Einleitrohr sowie einem Thermofühler mit 1,6 mm Durchmesser ausgestattet, die bis 3 mm über den Boden in den Reaktor ragten.

Die Heizleistung des elektrischen Heizmantels lag während der Aktivierung [erste Aktivierungsstufe] im Durchschnitt bei ca. 20% der maximalen Heizleistung. Durch die Regelung schwankte die Heizleistung um ±5% der maximalen Heizleistung. Das Auftreten einer erhöhten Wärmeentwicklung im Reaktor, hervorgerufen durch die rasche Umsetzung von Propylenoxid während der Aktivierung des Katalysators [zweite Aktivierungsstufe] wurde beobachtet über eine reduzierte Wärmeleistung des Heizmantels, Einschalten der Gegenkühlung und gegebenenfalls einen Temperaturanstieg im Reaktor. Das Auftreten einer Wärmeentwicklung im Reaktor, hervorgerufen durch die kontinuierliche Umsetzung von Propylenoxid während der Reaktion

[Polymerisationsstufe] führte zu einem Absenken der Leistung des Heizmantels auf ca. 8% der maximalen Heizleistung. Durch die Regelung schwankte die Heizleistung um ±5% der maximalen Heizleistung.

Bei dem in den Beispielen eingesetzten Hohlwellenrührer handelte es sich um einen Hohlwellenrührer, bei dem das Gas über eine hohle Welle des Rührers in die Reaktionsmischung eingeleitet wurde. Der auf der Hohlwelle angebrachte Rührkörper wies vier Arme auf, hatte einen Durchmesser von 35 mm und eine Höhe von 14 mm. An jedem Ende des Arms waren zwei Gasauslässe angebracht, die einen Durchmesser von 3 mm aufwiesen. Durch die Drehung des Rührers entstand ein Unterdruck derart, dass das über der Reaktionsmischung befindliche Gas ($CO_2$ und ggf. Alkylenoxid) abgesaugt wurde und über die Hohlwelle des Rührers in die Reaktionsmischung eingeleitet wurde.

a) Bei dem Aufbau der Polymerkette der niedrigviskosen Polyethercarbonatpolyole durch Terpolymerisation definiert gewichtsverschiedener Alkylenoxide und $CO_2$ resultiert neben dem cyclischen Alkylencarbonat das niedrigviskose Polyethercarbonatpolyol mit Seitenketten, welches einerseits in Formel (XIIIa) gezeigte Polycarbonat-Einheiten

enthält,

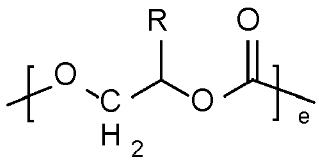 bzw. 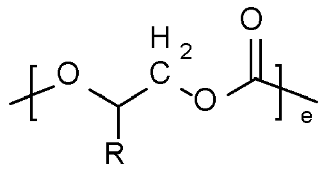

(XIIIa)

und andererseits in Formel (XIIIb) gezeigte Polyether-Einheiten enthält.

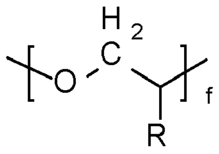 bzw. 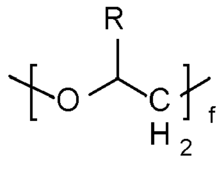

(XIIIb)

Das Verhältnis der Menge an cyclischem Propylencarbonat zu Polyethercarbonatpolyol (Selektivität; Verhältnis g/e) sowie der Anteil der nicht umgesetzten Monomere (Propylenoxid $R_{PO}$,

Allylglycidylether $R_{AGE}$ in mol%, Maleinsäureanhydrid $R_{MA}$ in mol%) wurden mittels $^{1}$H-NMR Spektroskopie bestimmt. Dazu wurde jeweils eine Probe der nach der Reaktion erhaltenen Reaktionsmischung in deuteriertem Chloroform gelöst und auf einem Spektrometer der Firma Bruker (AV400, 400 MHz) vermessen.

Anschließend wurde die Reaktionsmischung mit Dichlormethan (20 ml) verdünnt und die Lösung durch einen Fallfilmverdampfer geleitet. Die Lösung (0,1 kg in 3 h) lief entlang der inneren Wand eines von außen auf 120°C beheizten Rohres mit 70 mm Durchmesser und 200 mm Länge herab, wobei die Reaktionsmischung durch drei mit einer Geschwindigkeit von 250 U/min rotierende Rollen mit 10 mm Durchmesser jeweils gleichmäßig als dünner Film auf der inneren Wand des Fallfilmverdampfers verteilt wurde. Im Inneren des Rohres wurde über eine Pumpe ein Druck von 3 mbar eingestellt. Die von leicht flüchtigen Bestandteilen (nicht umgesetzte Alkylenoxide, cyclisches Carbonat, Lösungsmittel) gereinigte Reaktionsmischung wurde am unteren Ende des beheizten Rohres in einer Vorlage aufgefangen.

Das molare Verhältnis von Carbonatgruppen zu Ethergruppen in den niedrigviskosen Polyethercarbonatpolyolen mit Seitenketten (Verhältnis e/f) sowie der molare Anteil von in das Polymer eingebautem Allylglycidylether und Maleinsäureanhydrid wurden mittels $^{1}$H-NMR Spektroskopie bestimmt. Eine Probe der gereinigten Reaktionsmischung wurde dazu jeweils in deuteriertem Chloroform gelöst und auf einem Spektrometer der Firma Bruker (AV400, 400 MHz) vermessen.

Die relevanten Resonanzen im $^{1}$H-NMR Spektrum (bezogen auf TMS = 0 ppm), die zur Integration verwendet wurden, sind wie folgt:

| Signal | Verschiebung in ppm | Bezeichnung | Fläche entspricht Anzahl H-Atomen |
|---|---|---|---|
| I1 | 1,10-1,17 | $CH_3$-Gruppe Polyether-Einheiten | 3 |
| I2 | 1,25-1,34 | $CH_3$-Gruppe Polycarbonat-Einheiten | 3 |
| I3 | 1,45-1,48 | $CH_3$-Gruppe cyclisches Propylencarbonat | 3 |
| I4 | 2,95-3,00 | CH-Gruppe freies, nicht abreagiertes Propylenoxid | 1 |
| I5 | 5,83-5,94 | CH Gruppe (Doppelbindung aus dem Einbau von Allylglycidylether) | 1 |
| I6 | 6,22-6,29 | CH Gruppe (Doppelbindung aus dem Einbau von Maleinsäureanhydrid) | 2 |
| I7 | 6,86-6,96 | CH Gruppe (aromatischer Ring aus dem Einbau von Glycidylphenylether) | 3 |
| I8 | 0,86-0,92 | $CH_3$-Gruppen (aus dem Einbau von 2-Ethylhexylglycidylether) | 6 |

(fortgesetzt)

| Signal | Verschiebung in ppm | Bezeichnung | Fläche entspricht Anzahl H-Atomen |
|---|---|---|---|
| I9 | 6,81-6,87 | CH Gruppen (aromatischer Ring aus dem Einbau von *p*-tert-Butylphenylglycidylether) | 2 |
| I10 | 4,49-4,59 | CH-Gruppe cyclisches Propylencarbonat | I10 |
| I11 | 4,80-5,10 | CH-Gruppe Polycarbonat-Einheiten und einer CH-Gruppe des cyclischen Propylencarbonats | I11 |

Angegeben ist das molare Verhältnis der Menge an cyclischem Propylencarbonat zu Carbonat-Einheiten im Polyethercarbonatpolyol (Selektivität g/e) und das molare Verhältnis von Carbonatzu Ethergruppen im Polyethercarbonatpolyol (e/f) sowie die Anteile des nicht umgesetzten Propylenoxids (in mol%) und Maleinsäureanhydrids (in mol%).

Unter Berücksichtigung der relativen Intensitäten wurden die Werte wie folgt berechnet:

Molares Verhältnis der Menge an cyclischem Propylencarbonat zu Carbonat-Einheiten im Polyethercarbonatpolyol (Selektivität g/e):

$$g/e = I3 / I2$$

Molares Verhältnis von Carbonatgruppen zu Ethergruppen im Polyethercarbonatpolyol (e/f):

$$e/f = I2 / I1$$

Der Anteil an Carbonateinheiten in den Wiederholungseinheiten des Polyethercarbonatpolyols erhalten aus der Copolymerisation von Propylenoxid und $CO_2$:

$$C_{Carbonat} = [(I2/3) / ((I1/3) + (I2/3))] \times 100\%$$

Der Anteil an Carbonateinheiten in den Wiederholungseinheiten des Polyethercarbonatpolyols erhalten aus der Terpolymerisation von Propylenoxid, Allylglycidylether und $CO_2$ (P1):

$$C_{Carbonat}\,(P1) = [(I2/3) / ((I1/3) + (I2/3) + (I5))] \times 100\%$$

Der Anteil der über den Einbau des Allylglycidylethers in den Wiederholungseinheiten des Polyethercarbonatpolyols (P1):

$$C_{AGE} = [(I5) / ((I1/3) + (I2/3) + (I5))] \times 100\%$$

Der Anteil an Carbonateinheiten in den Wiederholungseinheiten des Polyetherestercarbonatpolyols erhalten aus der Terpolymerisation von Propylenoxid, Maleinsäureanhydrids und $CO_2$ (P2):

$$C_{Carbonat}\,(P2) = [(I2/3) / ((I1/3) + (I2/3) + (I6/2))] \times 100\%$$

Der Anteil der über den Einbau des Maleinsäureanhydrids in den Wiederholungseinheiten des Polyethercarbonatpolyols (P2):

$$C_{MSA} = [(I6/2) / ((I1/3) + (I2/3) + (I6/2))] \times 100\%$$

Der Anteil an Carbonateinheiten in den Wiederholungseinheiten des Polyetherestercarbonatpolyols erhalten aus der Terpolymerisation von Propylenoxid, Allylglycidylether, Maleinsäureanhydrids und $CO_2$(P3):

$$C_{Carbonat}\,(P3) = [(I2/3) / ((I1/3) + (I2/3) + (I5) + (I6/2))] \times 100\%$$

Der Anteil der über den Einbau des Allylglycidylethers in den Wiederholungseinheiten des Polyetherestercarbonatpolyols (P3):

$$C'_{AGE} = [(I5) / ((I1/3) + (I2/3) + (I5) + (I6/2))] \times 100\%$$

Der Anteil der über den Einbau des Maleinsäureanhydrids in den Wiederholungseinheiten des Polyetherestercarbonatpolyols (P3):

$$C'_{MSA} = [(I6/2) / ((I1/3) + (I2/3) + (I5) + (I6/2))] \times 100\%$$

Der Anteil an Carbonateinheiten in den Wiederholungseinheiten des Polyethercarbonatpolyols erhalten aus der Terpolymerisation von Propylenoxid, Glycidylphenylether und $CO_2$ (P4):

$$C_{Carbonat}\,(P4) = [(I11\text{-}I10) / ((I11\text{-}I10) + ((I1/3) + (I7/3))] \times 100\%$$

Der Anteil der über den Einbau des Glycidylphenylether in den Wiederholungseinheiten des Polyethercarbonatpolyols (P4):

$$C_{GPE} = [(I7/3) / ((I11\text{-}I10) + ((I1/3) + (I7/3))] \times 100\%$$

Der Anteil an Carbonateinheiten in den Wiederholungseinheiten des Polyethercarbonatpolyols erhalten aus der Terpolymerisation von Propylenoxid, 2-Ethylhexylglycidylether und $CO_2$ (P5):

$$C_{Carbonat}\,(P5) = [(I11\text{-}I10) / ((I11\text{-}I10) + ((I1/3) + (I8/6))] \times 100\%$$

Der Anteil der über den Einbau des 2-Ethylhexylglycidylether in den Wiederholungseinheiten des Polyethercarbonatpolyols (P5):

$$C_{EHGE} = [(I8/3) / ((I11\text{-}I10) + ((I1/3) + (I8/6))] \times 100\%$$

Der Anteil an Carbonateinheiten in den Wiederholungseinheiten des Polyethercarbonatpolyols erhalten aus der Terpolymerisation von Propylenoxid, *p*-tert-Butylphenylglycidylether und $CO_2$ (P6):

$$C_{Carbonat}\,(P6) = [(I11\text{-}I10) / ((I11\text{-}I10) + ((I1/3) + (I9/2))] \times 100\%$$

Der Anteil der über den Einbau des *p*-tert-Butylphenylglycidylether in den Wiederholungseinheiten des Polyethercarbonatpolyols (P6):

$$C_{t\text{-}BPGE} = [(I9/2)/ ((I11\text{-}I10) + ((I1/3) + (I9/2))] \times 100\%$$

Der Anteil an Carbonateinheiten in den Wiederholungseinheiten des Polyethercarbonatpolyols in Vergleichsbeispiel 11:

$$C'_{Carbonat} = [(I11\text{-}I10) / ((I11\text{-}I10) + ((I1/3)))] \times 100\%$$

**Beispiel 1:** Terpolymerisation einer Mischung von Propylenoxid, 4,3-Mol% Allylglycidylether und $CO_2$

[erste Aktivierungsstufe]

In einem 300 ml Druckreaktor ausgestattet mit einem Gaseintragsrührer wurde eine Mischung aus DMC-Katalysator (16 mg) und PET-1 (20 g) vorgelegt und 30 min bei 130°C in einem partiellen Vakuum (50 mbar) unter Durchleiten von Argon durch die Reaktionsmischung gerührt.

[zweite Aktivierungsstufe]

Nach Aufpressen von 15 bar $CO_2$, wobei ein leichter Temperaturabfall zu beobachten war, und Wiedererreichen einer Temperatur von 130°C wurden 2,0 g einer Monomermischung (8,2 Gew.-% Allylglycidylether) entsprechend 4,3 mol% gelöst in Propylenoxid) mit Hilfe einer HPLC-Pumpe (1 ml/min) zudosiert. Die Reaktionsmischung wurde 20 min bei 130°C gerührt (800 rpm). Die Zugabe von 2,0 g der Monomermischung wurde ein zweites und drittes Mal wiederholt.

[Polymerisationsstufe]

Nach Abkühlen auf 100°C wurden weitere 53,9 g der Monomermischung (8,2 Gew.-% Allylglycidylether) über eine HPLC-Pumpe (1 ml/min) zudosiert, wobei der $CO_2$ Druck konstant auf 15 bar gehalten wurde. Anschließend wurde die Reaktionsmischung weitere 2 h bei 100°C gerührt. Die Reaktion wurde durch Kühlung des Reaktors mit Eiswasser gestoppt.

Das resultierende Gemisch war frei von den eingesetzten Monomeren Propylenoxid und Allylglycidylether.

| | | |
|---|---|---|
| Selektivität | g/e | 0,05 |
| | e/f | 0,23 |
| $C_{Carbonat}$ (P1) in % | | 19,3 |
| $C_{AGE}$ in % | | 2,6 |
| Molekulargewicht in g/mol | $M_n$ | 5428 |
| Polydispersität | | 1,2 |
| OH-Zahl in mg KOH/g | | 26,0 |

**Beispiel 2:** Terpolymerisation einer Mischung von Propylenoxid, 8,3 mol-% Allylglycidylether und $CO_2$

[erste Aktivierungsstufe]

In einem 300 ml Druckreaktor ausgestattet mit einem Gaseintragsrührer wurde eine Mischung aus DMC-Katalysator (16 mg) und PET-1 (20 g) vorgelegt und 30 min bei 130°C in einem partiellen Vakuum (50 mbar) unter Durchleiten von Argon durch die Reaktionsmischung gerührt.

[zweite Aktivierungsstufe]

Nach Aufpressen von 15 bar $CO_2$, wobei ein leichter Temperaturabfall zu beobachten war, und Wiedererreichen einer Temperatur von 130°C wurden 2,0 g einer Monomermischung (15,2 Gew.-% Allylglycidylether entsprechend 8,3 mol% gelöst in Propylenoxid) mit Hilfe einer HPLC-Pumpe (1 ml/min) zudosiert. Die Reaktionsmischung wurde 20 min bei 130°C gerührt (800 rpm). Die Zugabe von 2,0 g der Monomermischung wurde ein zweites und drittes Mal wiederholt.

[Polymerisationsstufe]

Nach Abkühlen auf 100°C wurden weitere 54,0 g der Monomermischung (15,2 Gew.-% Allylglycidylether) über eine HPLC-Pumpe (1 ml/min) zudosiert, wobei der $CO_2$ Druck konstant auf 15 bar gehalten wurde. Anschließend wurde die Reaktionsmischung weitere 2 h bei 100°C gerührt. Die Reaktion wurde durch Kühlung des Reaktors mit Eiswasser

gestoppt.

Das resultierende Gemisch war frei von den eingesetzten Monomeren Propylenoxid und Allylglycidylether.

| | | |
|---|---|---|
| Selektivität | g/e | 0,06 |
| | e/f | 0,25 |
| $C_{Carbonat}$ (P1) in % | | 20,3 |
| $C_{AGE}$ in % | | 6,4 |
| Molekulargewicht in g/mol | $M_n$ | 5446 |
| Polydispersität | | 2,0 |
| OH-Zahl in mg KOH/g | | 26,9 |

**Beispiel 3:** Terpolymerisation einer Mischung von Propylenoxid, 16,4 mol-%Allylglycidylether und $CO_2$

[erste Aktivierungsstufe]

In einem 300 ml Druckreaktor ausgestattet mit einem Gaseintragsrührer wurde eine Mischung aus DMC-Katalysator (16 mg) und PET-1 (20 g) vorgelegt und 30 min bei 130°C in einem partiellen Vakuum (50 mbar) unter Durchleiten von Argon durch die Reaktionsmischung gerührt.

[zweite Aktivierungsstufe]

Nach Aufpressen von 15 bar $CO_2$, wobei ein leichter Temperaturabfall zu beobachten war, und Wiedererreichen einer Temperatur von 130°C wurden 2,0 g einer Monomermischung (30,4 gew.% Allylglycidylether entsprechend 16,4 mol% gelöst in Propylenoxid) mit Hilfe einer HPLC-Pumpe (1 ml/min) zudosiert. Die Reaktionsmischung wurde 20 min bei 130°C gerührt (800 rpm). Die Zugabe von 2,0 g der Monomermischung wurde ein zweites und drittes Mal wiederholt.

[Polymerisationsstufe]

Nach Abkühlen auf 100°C wurden weitere 54,0 g der Monomermischung (30,4 gew.% Allylglycidylether) über eine HPLC-Pumpe (1 ml/min) zudosiert, wobei der $CO_2$ Druck konstant auf 15 bar gehalten wurde. Anschließend wurde die Reaktionsmischung weitere 2 h bei 100°C gerührt. Die Reaktion wurde durch Kühlung des Reaktors mit Eiswasser gestoppt.

Das resultierende Gemisch war frei von den eingesetzten Monomeren Propylenoxid und Allylglycidylether.

| | | |
|---|---|---|
| Selektivität | g/e | 0,09 |
| | e/f | 0,28 |
| $C_{Carbonat}$ (P1) in % | | 22,2 |
| $C_{AGE}$ in % | | 13,6 |
| Molekulargewicht in g/mol | $M_n$ | 5432 |
| Polydispersität | | 1,8 |
| OH-Zahl in mg KOH/g | | 28,6 |

**Beispiel 4 (Vgl.):** Copolymerisation von Propylenoxid und $CO_2$ ohne Zugabe eines schwereren, seitenkettentragenden Alkylenoxids

[erste Aktivierungsstufe]

In einem 300 ml Druckreaktor ausgestattet mit einem Gaseintragsrührer wurde eine Mischung aus DMC-Katalysator (16 mg) und PET-1 (20 g) vorgelegt und 30 min bei 130°C in einem partiellen Vakuum (50 mbar) unter Durchleiten von Argon durch die Reaktionsmischung gerührt.

[zweite Aktivierungsstufe]

Nach Aufpressen von 15 bar $CO_2$, wobei ein leichter Temperaturabfall zu beobachten war, und Wiedererreichen einer Temperatur von 130°C wurden 2,0 g Propylenoxid mit Hilfe einer HPLC-Pumpe (1 ml/min) zudosiert. Die Reaktionsmischung wurde 20 min bei 130°C gerührt (800 rpm). Die Zugabe von 2,0 g Propylenoxid wurde ein zweites und drittes Mal wiederholt.

[Polymerisationsstufe]

Nach Abkühlen auf 100°C wurden weitere 54,0 g Propylenoxid über eine HPLC-Pumpe (1 ml/min) zudosiert, wobei der $CO_2$ Druck konstant auf 15 bar gehalten wurde. Anschließend wurde die Reaktionsmischung weitere 2 h bei 100°C gerührt. Die Reaktion wurde durch Kühlung des Reaktors mit Eiswasser gestoppt.
Das resultierende Gemisch war frei von Propylenoxid.

| | | |
|---|---|---|
| Selektivität | g/e | 0,09 |
| | e/f | 0,26 |
| $C_{Carbonat}$ in % | | 20,7 |
| Molekulargewicht in g/mol | $M_n$ | 5495 |
| Polydispersität | | 1,4 |
| OH-Zahl in mg KOH/g | | 26,2 |

**Beispiel 5 (Vgl.):** Copolymerisation von Propylenoxid und $CO_2$ ohne Zugabe eines schwereren, seitenkettentragenden Alkylenoxids unter Verwendung eines trifunktionellen Starters zur Herstellung eines Polyethercarbonatpolyols mit drei gleich langen Seitenketten

[erste Aktivierungsstufe]

In einem 300 ml Druckreaktor ausgestattet mit einem Gaseintragsrührer wurde eine Mischung aus DMC-Katalysator (33 mg) und PET-2 (16,8 g) vorgelegt und 30 min bei 130°C in einem partiellen Vakuum (50 mbar) unter Durchleiten von Argon durch die Reaktionsmischung gerührt.

[zweite Aktivierungsstufe]

Nach Aufpressen von 15 bar $CO_2$, wobei ein leichter Temperaturabfall zu beobachten war, und Wiedererreichen einer Temperatur von 130°C wurden 1,7 g Propylenoxid mit Hilfe einer HPLC-Pumpe (1 ml/min) zudosiert. Die Reaktionsmischung wurde 20 min bei 130°C gerührt (800 rpm). Die Zugabe von 1,7 g Propylenoxid wurde ein zweites und drittes Mal wiederholt.

[Polymerisationsstufe]

Nach Abkühlen auf 100°C wurden weitere 138,0 g Propylenoxid über eine HPLC-Pumpe (1 ml/min) zudosiert, wobei der $CO_2$ Druck konstant auf 15 bar gehalten wurde. Anschließend wurde die Reaktionsmischung weitere 2 h bei 100°C gerührt. Die Reaktion wurde durch Kühlung des Reaktors mit Eiswasser gestoppt.
Das resultierende Gemisch war frei von Propylenoxid.

| | | |
|---|---|---|
| Selektivität | g/e | 0,11 |
| | e/f | 0,24 |
| $C_{Carbonat}$ in % | | 19,1 |
| Molekulargewicht in g/mol | $M_n$ | 5964 |
| Polydispersität | | 1,3 |
| OH-Zahl in mg KOH/g | | 35,7 |

Tabelle 1: Vergleich der Resultate aus den Beispielen 1 bis 4

| Nr. | F | Gehalt in mol-% | Selektivität | | $M_n$ | Polydispersität | OH-Zahl | Viskosität |
|---|---|---|---|---|---|---|---|---|
| | | AGE | g/e | e/f | g/mol | | $mg_{KOH}/g$ | mPa·s |
| 1 | 2 | 2,6 | 0,08 | 0,23 | 5428 | 1,2 | 26,0 | 4'600 |
| 2 | 2 | 6,4 | 0,06 | 0,25 | 5446 | 2,0 | 26,9 | 4'000 |
| 3 | 2 | 13,6 | 0,09 | 0,28 | 5432 | 1,8 | 28,6 | 4'800 |
| 4 (Vgl.) | 2 | n.e. | 0,09 | 0,26 | 5495 | 1,4 | 26,2 | 7'900 |
| 5 (Vgl.) | 3 | n.e. | 0,11 | 0,24 | 5964 | 1,3 | 35,7 | 9'693 |
| (Vgl.): Vergleichsbeispiel; n.e.: nicht enthalten | | | | | | | | |

Ein Vergleich der Beispiele 1 bis 3 mit dem Vergleichsbeispiel 4 zeigt, dass der Einbau von Seitenketten in lineare Polyethercarbonatketten (Funktionalität F = 2) zu einer Verringerung der Viskosität der erhaltenen Produkte führt. Mit steigendem Anteil an Seitenketten (Beispiel 1 zu Beispiel 2) nimmt die Viskosität zunächst ab und steigt mit weiter steigendem Anteil an Seitenketten (Beispiel 2 zu Beispiel 3) wieder an. Ein Vergleich der Beispiele 1 bis 3 mit dem Vergleichsbeispiel 5 zeigt, dass symmetrisch aufgebaute Polyethercarbonatpolyole mit drei gleich langen Polyethercarbonat-Seitenketten (Funktionalität F = 3, durchschnittliches Molekulargewicht von 5964 / 3 = 1988 g/mol je Seitenkette), die von einer zentralen niedermolekularen Einheit ausgehen, eine deutlich höhere Viskosität aufweisen.

**Beispiel 6:** Block-Terpolymer, durch Terpolymerisation mit Propylenoxid, 16,6 mol-% Maleinsäureanhydrid und $CO_2$, gefolgt von einer Terpolymerisation mit Propylenoxid, 16,4 mol-% Allylglycidylether und $CO_2$

[erste Aktivierungsstufe]

In einem 300 ml Druckreaktor ausgestattet mit einem Gaseintragsrührer wurde eine Mischung aus DMC-Katalysator (16 mg) und PET-1 (20 g) vorgelegt und 30 min bei 130°C in einem partiellen Vakuum (50 mbar) unter Durchleiten von Argon durch die Reaktionsmischung gerührt.

[zweite Aktivierungsstufe]

Nach Aufpressen von 15 bar $CO_2$, wobei ein leichter Temperaturabfall zu beobachten war, und Wiedererreichen einer Temperatur von 130°C wurden 2,0 g einer ersten Monomermischung (26,2 Gew.-% Maleinsäureanhydrid entsprechend 16,6 mol% gelöst in Propylenoxid) mit Hilfe einer HPLC-Pumpe (1 ml/min) zudosiert. Die Reaktionsmischung wurde 20 min bei 130°C gerührt (800 rpm). Die Zugabe von 2,0 g der ersten Monomermischung wurde ein zweites und drittes Mal wiederholt.

[Polymerisationsstufe]

Nach Abkühlen auf 100°C wurden weitere 23,8 g der ersten Monomermischung (26,2 Gew.-% Maleinsäureanhydrid gelöst in Propylenoxid) über eine HPLC-Pumpe (1 ml/min) zudosiert, wobei der $CO_2$ Druck konstant auf 15 bar gehalten wurde. Nach der Zugabe der ersten Monomermischung (26,2 Gew.-% Maleinsäureanhydrid gelöst in Propylenoxid) wurden 30 g einer zweiten Monomermischung (30,4 Gew.-% Allylglycidylether entsprechend 16,4 mol% gelöst in Propylenoxid) über eine HPLC-Pumpe (1 ml/min) zudosiert, wobei der $CO_2$ Druck konstant auf 15 bar gehalten wurde. Anschließend wurde die Reaktionsmischung weitere 2 h bei 100°C gerührt. Die Reaktion wurde durch Kühlung des Reaktors mit Eiswasser gestoppt.

Das resultierende Gemisch war frei von den eingesetzten Monomeren Propylenoxid ($R_{PO}$= 0%), Allylglycidylether ($R_{AGE}$ = 0%) und Maleinsäureanhydrid ($R_{MA}$ = 0%).

| | | |
|---|---|---|
| Selektivität | g/e | 0,04 |
| | e/f | 0,56 |
| $C_{Carbonat}$ (P3) in % | | 36,3 |
| $C'_{AGE}$ in % | | 6,9 |

(fortgesetzt)

| | | |
|---|---|---|
| $C'_{MSA}$ in % | | 7,2 |
| Molekulargewicht in g/mol | $M_n$ | 4340 |
| Polydispersität | | 3,4 |
| OH-Zahl in mg KOH/g | | 24,3 |

**Beispiel 7 (Vgl.):** Terpolymerisation von Propylenoxid, 16,6 mol-% Maleinsäureanhydrid und $CO_2$

[erste Aktivierungsstufe]

In einem 300 ml Druckreaktor ausgestattet mit einem Gaseintragsrührer wurde eine Mischung aus DMC-Katalysator (16 mg) und PET-1 (20 g) vorgelegt und 30 min bei 130°C in einem partiellen Vakuum (50 mbar) unter Durchleiten von Argon durch die Reaktionsmischung gerührt.

[zweite Aktivierungsstufe]

Nach Aufpressen von 15 bar $CO_2$, wobei ein leichter Temperaturabfall zu beobachten war, und Wiedererreichen einer Temperatur von 130°C wurden 2,0 g einer Monomermischung (26,2 Gew.-% Maleinsäureanhydrid entsprechend 16,6 mol% gelöst in Propylenoxid) mit Hilfe einer HPLC-Pumpe (1 ml/min) zudosiert. Die Reaktionsmischung wurde 20 min bei 130°C gerührt (800 rpm). Die Zugabe von 2,0 g der Monomermischung wurde ein zweites und drittes Mal wiederholt.

[Polymerisationsstufe]

Nach Abkühlen auf 100°C wurden weitere 54,0 g der Monomermischung (26,2 Gew.-% Maleinsäureanhydrid gelöst in Propylenoxid) über eine HPLC-Pumpe (1 ml/min) zudosiert, wobei der $CO_2$ Druck konstant auf 15 bar gehalten wurde. Anschließend wurde die Reaktionsmischung weitere 2 h bei 100°C gerührt. Die Reaktion wurde durch Kühlung des Reaktors mit Eiswasser gestoppt.

Das resultierende Gemisch war frei von den eingesetzten Monomeren Propylenoxid und Maleinsäureanhydrid.

| | | |
|---|---|---|
| Selektivität | g/e | 0,02 |
| | e/f | 0,52 |
| $C_{Carbonat}$ (P2) in % | | 29,8 |
| $C_{MA}$ in % | | 12,8 |
| Molekulargewicht in g/mol | $M_n$ | 4955 |
| Polydispersität | | 2,1 |
| OH-Zahl in mg KOH/g | | 25,0 |

Tabelle 2: Vergleich der Resultate aus den Beispielen 6 und 7

| Nr. | Gehalt in mol-% | | Selektivität | | $M_n$ | Polydispersität | OH-Zahl | Viskosität |
|---|---|---|---|---|---|---|---|---|
| | AGE | MA | g/e | e/f | g/mol | | $mg_{KOH}/g$ | mPa·s |
| 6 | 6,9 | 7,2 | 0,04 | 0,56 | 4340 | 3,4 | 24,3 | 17'000 |
| 7 (Vgl.) | n.e. | 12,8 | 0,02 | 0,52 | 4955 | 2,1 | 25,0 | 29'200 |
| (Vgl.): Vergleichsbeispiel; n.e.: nicht enthalten | | | | | | | | |

Die Produkte aus Beispiel 6 und Vergleichsbeispiel 7 enthalten eine identische Anzahl an Doppelbindungen und haben dasselbe mittlere Molekulargewicht (gleiche OH-Zahl). Ein Vergleich des Beispiels 6 mit seitenkettentragenden Monomeren mit dem Vergleichsbeispiel 7 ohne seitenkettentragende Monomere zeigt, dass der Einbau von schwereren, seitenkettentragenden Monomeren zu einer Verringerung der Viskosität der erhaltenen Produkte führt.

**Beispiel 8:** Terpolymerisation von Propylenoxid, 6,7 mol-% Glycidylphenylether und $CO_2$

[erste Aktivierungsstufe]

In einem 300 ml Druckreaktor ausgestattet mit einem Gaseintragsrührer wurde eine Mischung aus DMC-Katalysator (16 mg) und PET-1 (20 g) vorgelegt und 30 min bei 130°C in einem partiellen Vakuum (50 mbar) unter Durchleiten von Argon durch die Reaktionsmischung gerührt.

[zweite Aktivierungsstufe]

Nach Aufpressen von 15 bar $CO_2$, wobei ein leichter Temperaturabfall zu beobachten war, und Wiedererreichen einer Temperatur von 130°C wurden 2,0 g einer Monomermischung (15,5 Gew.% Glycidylphenylether entsprechend 6,7 mol% gelöst in Propylenoxid) mit Hilfe einer HPLC-Pumpe (1 ml/min) zudosiert. Die Reaktionsmischung wurde 20 min bei 130°C gerührt (800 rpm). Die Zugabe von 2,0 g der Monomermischung wurde ein zweites und drittes Mal wiederholt.

[Polymerisationsstufe]

Nach Abkühlen auf 100°C wurden weitere 60,3 g der Monomermischung (15,5 Gew.% Glycidylphenylether gelöst in Propylenoxid) über eine HPLC-Pumpe (1 ml/min) zudosiert, wobei der $CO_2$ Druck konstant auf 15 bar gehalten wurde. Anschließend wurde die Reaktionsmischung weitere 2 h bei 100°C gerührt. Die Reaktion wurde durch Kühlung des Reaktors mit Eiswasser gestoppt.

Das resultierende Gemisch war frei von den eingesetzten Monomeren Propylenoxid und Glycidylphenylether.

| | | |
|---|---|---|
| Selektivität | g/e | 0,08 |
| | e/f | 0,25 |
| $C_{Carbonat}$ (P4) in % | | 18,7 |
| $C_{GPE}$ in % | | 5,2 |
| Molekulargewicht in g/mol | $M_n$ | 4912 |
| Polydispersität | | 1,5 |
| OH-Zahl in mg KOH/g | | 25,1 |

**Beispiel 9:** Terpolymerisation von Propylenoxid, 6,7 mol-% 2-Ethylhexylglycidylether und $CO_2$

[erste Aktivierungsstufe]

In einem 300 ml Druckreaktor ausgestattet mit einem Gaseintragsrührer wurde eine Mischung aus DMC-Katalysator (16 mg) und PET-1 (20 g) vorgelegt und 30 min bei 130°C in einem partiellen Vakuum (50 mbar) unter Durchleiten von Argon durch die Reaktionsmischung gerührt.

[zweite Aktivierungsstufe]

Nach Aufpressen von 15 bar $CO_2$, wobei ein leichter Temperaturabfall zu beobachten war, und Wiedererreichen einer Temperatur von 130°C wurden 2,0 g einer Monomermischung (18,6 Gew.% 2-Ethylhexylglycidylether entsprechend 6,7 mol% gelöst in Propylenoxid) mit Hilfe einer HPLC-Pumpe (1 ml/min) zudosiert. Die Reaktionsmischung wurde 20 min bei 130°C gerührt (800 rpm). Die Zugabe von 2,0 g einer Monomermischung wurde ein zweites und drittes Mal wiederholt.

[Polymerisationsstufe]

Nach Abkühlen auf 100°C wurden weitere 62,8 g der Monomermischung (18,6 Gew.% 2-Ethylhexylglycidylether gelöst in Propylenoxid) über eine HPLC-Pumpe (1 ml/min) zudosiert, wobei der $CO_2$ Druck konstant auf 15 bar gehalten

wurde. Anschließend wurde die Reaktionsmischung weitere 2 h bei 100°C gerührt. Die Reaktion wurde durch Kühlung des Reaktors mit Eiswasser gestoppt.

Das resultierende Gemisch war frei von den eingesetzten Monomeren Propylenoxid und 2-Ethylhexylglycidylether.

| | | |
|---|---|---|
| Selektivität | g/e | 0,07 |
| | e/f | 0,26 |
| $C_{Carbonat}$ (P5) in % | | 19,3 |
| $C_{EHGE}$ in % | | 5,4 |
| Molekulargewicht in g/mol | $M_n$ | 5320 |
| Polydispersität | | 2,7 |
| OH-Zahl in mg KOH/g | | 23,5 |

**Beispiel 10:** Terpolymerisation von Propylenoxid, 6,7 mol-% *p*-tert-Butylphenylglycidylether und $CO_2$

[erste Aktivierungsstufe]

In einem 300 ml Druckreaktor ausgestattet mit einem Gaseintragsrührer wurde eine Mischung aus DMC-Katalysator (16 mg) und PET-1 (20 g) vorgelegt und 30 min bei 130°C in einem partiellen Vakuum (50 mbar) unter Durchleiten von Argon durch die Reaktionsmischung gerührt.

[zweite Aktivierungsstufe]

Nach Aufpressen von 15 bar $CO_2$, wobei ein leichter Temperaturabfall zu beobachten war, und Wiedererreichen einer Temperatur von 130°C wurden 2,0 g einer Monomermischung (20,2 Gew.% *p*-tert-Butylphenylglycidylether entsprechend 6,7 mol% gelöst in Propylenoxid) mit Hilfe einer HPLC-Pumpe (1 ml/min) zudosiert. Die Reaktionsmischung wurde 20 min bei 130°C gerührt (800 rpm). Die Zugabe von 2,0 g der Monomermischung wurde ein zweites und drittes Mal wiederholt.

[Polymerisationsstufe]

Nach Abkühlen auf 100°C wurden weitere 64,2 g der Monomermischung (20,2 Gew.% *p*-tert-Butylphenylglycidylether gelöst in Propylenoxid) über eine HPLC-Pumpe (1 ml/min) zudosiert, wobei der $CO_2$ Druck konstant auf 15 bar gehalten wurde. Anschließend wurde die Reaktionsmischung weitere 2 h bei 100°C gerührt. Die Reaktion wurde durch Kühlung des Reaktors mit Eiswasser gestoppt.

Das resultierende Gemisch war frei von den eingesetzten Monomeren Propylenoxid und *p*-tert-Butylphenylglycidylether.

| | | |
|---|---|---|
| Selektivität | g/e | 0,08 |
| | e/f | 0,23 |
| $C_{Carbonat}$ (P6) in % | | 18,1 |
| $C_{BPGE}$ in % | | 4,5 |
| Molekulargewicht in g/mol | $M_n$ | 4999 |
| Polydispersität | | 1,5 |
| OH-Zahl in mg KOH/g | | 24,0 |

**Beispiel 11 (Vgl.):** Reaktion von Propylenoxid und $CO_2$ ohne Comonomer-Zugabe

[erste Aktivierungsstufe]

In einem 300 ml Druckreaktor ausgestattet mit einem Gaseintragsrührer wurde eine Mischung aus DMC-Katalysator (16 mg) und PET-1 (20 g) vorgelegt und 30 min bei 130°C in einem partiellen Vakuum (50 mbar) unter Durchleiten von Argon durch die Reaktionsmischung gerührt.

[zweite Aktivierungsstufe]

Nach Aufpressen von 15 bar $CO_2$, wobei ein leichter Temperaturabfall zu beobachten war, und Wiedererreichen einer Temperatur von 130°C wurden 2,0 g Propylenoxid mit Hilfe einer HPLC-Pumpe (1 ml/min) zudosiert. Die Reaktionsmischung wurde 20 min bei 130°C gerührt (800 rpm). Die Zugabe von 2,0 g Propylenoxid wurde ein zweites und drittes Mal wiederholt.

[Polymerisationsstufe]

Nach Abkühlen auf 100°C wurden weitere 64,0 g Propylenoxid über eine HPLC-Pumpe (1 ml/min) zudosiert, wobei der $CO_2$ Druck konstant auf 15 bar gehalten wurde. Anschließend wurde die Reaktionsmischung weitere 2 h bei 100°C gerührt. Die Reaktion wurde durch Kühlung des Reaktors mit Eiswasser gestoppt.

Das resultierende Gemisch war frei von Propylenoxid.

| | | |
|---|---|---|
| Selektivität | g/e | 0,08 |
| | e/f | 0,25 |
| $C_{Carbonat}$ in % | | 20,0 |
| Molekulargewicht in g/mol | $M_n$ | 5427 |
| Polydispersität | | 1,3 |
| OH-Zahl in mg KOH/g | | 24,5 |

Tabelle 3: Vergleich der Resultate aus den Beispielen 8 bis 11

| Nr. | Comonomer-Gehalt | | Selektivität | | $M_n$ | Polydispersität | OH-Zahl | Viskosität |
|---|---|---|---|---|---|---|---|---|
| | | mol-% | g/e | e/f | g/mol | | mg KOH/g | mPa·s |
| 8 | GPE | 5,2 | 0,08 | 0,25 | 4912 | 1,5 | 25,1 | 10'210 |
| 9 | EHGE | 5,4 | 0,07 | 0,26 | 5320 | 2,7 | 23,5 | 11'320 |
| 10 | BPGE | 4,5 | 0,08 | 0,23 | 4999 | 1,5 | 24,0 | 10'760 |
| 11 (Vgl.) | n.e. | n.e. | 0,08 | 0,25 | 5427 | 1,3 | 24,5 | 14'870 |
| (Vgl.): Vergleichsbeispiel; n.e.: nicht enthalten | | | | | | | | |

Ein Vergleich der Beispiele 8 bis 10 mit dem Vergleichsbeispiel 10 zeigt, dass die Einführung unterschiedlicher Seitenketten in die Polymerkette jeweils zu einer Verringerung der Viskosität der erhaltenen Produkte führt.

## Patentansprüche

1. Verfahren zur Herstellung von Polyethercarbonatpolyolen mit Seitenketten umfassend die Schritte:

   (α) Vorlegen eines Katalysators und:

   (αα) eines Suspensionsmittels, das keine H-funktionellen Gruppen enthält und/oder
   (αβ) einer H-funktionellen Starterverbindung

   (γ) Zudosieren von Kohlendioxid und mindestens zweier Alkylenoxide, wobei diese Alkylenoxide von dem im Schritt (β) zudosierten Alkylenoxid oder zudosierten Alkylenoxiden gleich oder verschieden sein können,
   **dadurch gekennzeichnet, dass**
   die Differenz des Molekulargewichts des leichtesten und des schwersten der in der Stufe (γ) zudosierten Alkylenoxide größer oder gleich 24 g/mol beträgt und das leichteste Alkylenoxid ein C2-C4-Alkylenoxid ist und wobei weiterhin für den Fall, dass in Schritt (α) keine H-funktionelle Starterverbindung vorgelegt wurde, Schritt (γ) das Zudosieren einer H-funktionellen Starterverbindung umfasst.

**2.** Verfahren nach Anspruch 1, weiterhin umfassend den Schritt (β) zwischen Schritt (α) und Schritt (γ):

(β) Zudosieren mindestens eines Epoxides, wobei die Differenz des Molekulargewichts des leichtesten und des schwersten der in den Stufen (β) und (γ) zudosierten Alkylenoxide größer oder gleich 24 g/mol beträgt und das leichteste Alkylenoxid ein C2-C4-Alkylenoxid ist und wobei das oder die in Schritt (γ) zudosierten Epoxide von dem im Schritt (β) zudosierten Epoxid oder zudosierten Epoxiden gleich oder verschieden sein können.

**3.** Verfahren nach Anspruch 1 oder 2, wobei der Katalysator ein DMC-Katalysator ist.

**4.** Verfahren nach einem der vorhergehenden Ansprüche, wobei im Schritt (β) ebenfalls Kohlendioxid zudosiert wird.

**5.** Verfahren nach einem der Ansprüche 2 bis 4, wobei mindestens eines der in den Stufen (β) und/oder (γ) zudosierten Alkylenoxide eine C2-C15 Alkyl- oder Alkenyl-Gruppe aufweist.

**6.** Verfahren nach einem der vorhergehenden Ansprüche, wobei eines oder mehrere der im Schritt (γ) zudosierten Alkylenoxide ausgewählt sind aus der Gruppe der Glycidylether.

**7.** Verfahren nach einem der vorhergehenden Ansprüche,wobei das Verfahren kontinuierlich durchgeführt wird.

**8.** Verfahren nach einem der Ansprüche 2 bis 7, wobei in den Schritten (β) und/oder (γ) zusätzlich ein cyclisches Anhydrid zugegeben wird.

**9.** Polyethercarbonatpolyol erhältlich nach einem Verfahren nach einem der vorhergehenden Ansprüche, wobei die Viskosität des Polyethercarbonatpolyols bei 25°C kleiner oder gleich 20'000 mPa·s und größer oder gleich 100 mPa·s beträgt.

**10.** Polyethercarbonatpolyol nach Anspruch 9, wobei das Verhältnis der Carbonatester- zu Ethergruppen im Polymer ≥ 1:20 und ≤ 1:1 beträgt.

**11.** Polyethercarbonatpolyol nach einem der Ansprüche 9-10, wobei das Molekulargewicht $M_n$ ≥ 400 und ≤ 10'000'000 g/mol beträgt.

**12.** Polyethercarbonatpolyol nach einem der Ansprüche 9-11, wobei der Anteil des in das Polymer eingebauten schwersten Alkylenoxides ≥ 1 mol-% und ≤ 20 mol-% beträgt.

**13.** Verwendung des Polyethercarbonatpolyols nach einem der Ansprüche 9-12 als vernetzbare Komponente innerhalb einer Vernetzungsreaktion zur Herstellung duromerer oder elastomerer Netzwerke.

**14.** Verwendung des Polyethercarbonatpolyols nach Anspruch 13, wobei das Polyethercarbonatpolyol mit Di- und/oder Polyisocyanaten umgesetzt wird.

**15.** Verwendung des Polyethercarbonatpolyols nach einem der Ansprüche 9-12 in Wasch- und Reinigungsmittelformulierungen, als Weichmacher, Bohrflüssigkeiten, Kraftstoffadditiven, ionischen und nicht-ionischen Tensiden, Schmiermitteln, Prozesschemikalien für die Papier- oder Textilherstellung, kosmetischen Formulierungen oder als Porenbildner bei der Herstellung von Keramiken.

Europäisches Patentamt
European Patent Office
Office européen des brevets

# EUROPÄISCHER RECHERCHENBERICHT

Nummer der Anmeldung
EP 13 18 3206

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| X | WO 2010/028362 A1 (NOVOMER INC) 11. März 2010 (2010-03-11)<br>* Ansprüche 1,138-140 *<br>* Beispiel 1 *<br>* Seite 73, Zeile 11 - Seite 74, Zeile 13 *<br>----- | 1-15 | INV.<br>C08G65/26<br>C08G64/18 |
| X | JANSEN J. ET AL: "Synthesis of novel side-chain liquid crystalline polycarbonates",<br>MACROMOL. CHEM. PHYS.,<br>Bd. 200, 1999, Seiten 1407-1420,<br>XP002723522,<br>* Seite 1410, Spalte 2 *<br>* Seite 1411, Spalte 2 *<br>----- | 1-3,5-7,<br>9-12 | |
| A | EP 2 465 890 A1 (BAYER MATERIALSCIENCE AG [DE]) 20. Juni 2012 (2012-06-20)<br>* Anspruch 1 *<br>* Seite 4, Zeile 4 - Zeile 17 *<br>* Beispiel 1 *<br>----- | 1-15 | |
| | | | RECHERCHIERTE SACHGEBIETE (IPC) |
| A | DATABASE CAPLUS [Online]<br>CHEMICAL ABSTRACTS SERVICE, COLUMBUS, OHIO, US;<br>"Thermosetting polycarbonate compositions",<br>XP002723523,<br>Database accession no. 176:136631<br>* Zusammenfassung *<br>----- | 1-15 | C08G |
| A | US 2011/251355 A1 (JEONG JISU [KR] ET AL) 13. Oktober 2011 (2011-10-13)<br>* Anspruch 1; Beispiele 1-3 *<br>----- | 1-15 | |

Der vorliegende Recherchenbericht wurde für alle Patentansprüche erstellt

| Recherchenort | Abschlußdatum der Recherche | Prüfer |
|---|---|---|
| Den Haag | 30. April 2014 | O'Sullivan, Timothy |

2

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 13 18 3206

In diesem Anhang sind die Mitglieder der Patentfamilien der im obengenannnten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-04-2014

| Im Recherchenbericht angeführtes Patentdokument | Datum der Veröffentlichung | Mitglied(er) der Patentfamilie | Datum der Veröffentlichung |
|---|---|---|---|
| WO 2010028362 A1 | 11-03-2010 | CA 2736482 A1 | 11-03-2010 |
| | | CN 102149746 A | 10-08-2011 |
| | | CN 103333330 A | 02-10-2013 |
| | | EP 2337809 A1 | 29-06-2011 |
| | | JP 2012502143 A | 26-01-2012 |
| | | KR 20110048024 A | 09-05-2011 |
| | | KR 20120034813 A | 12-04-2012 |
| | | SG 193820 A1 | 30-10-2013 |
| | | US 2011230580 A1 | 22-09-2011 |
| | | US 2013066044 A1 | 14-03-2013 |
| | | US 2013244864 A1 | 19-09-2013 |
| | | US 2014046008 A1 | 13-02-2014 |
| | | WO 2010028362 A1 | 11-03-2010 |
| EP 2465890 A1 | 20-06-2012 | CA 2821812 A1 | 21-06-2012 |
| | | CN 103429637 A | 04-12-2013 |
| | | EP 2465890 A1 | 20-06-2012 |
| | | EP 2652008 A1 | 23-10-2013 |
| | | JP 2014503631 A | 13-02-2014 |
| | | SG 190274 A1 | 31-07-2013 |
| | | US 2013296450 A1 | 07-11-2013 |
| | | WO 2012080192 A1 | 21-06-2012 |
| US 2011251355 A1 | 13-10-2011 | CA 2795125 A1 | 20-10-2011 |
| | | CN 102918079 A | 06-02-2013 |
| | | EP 2558516 A2 | 20-02-2013 |
| | | JP 2013523988 A | 17-06-2013 |
| | | KR 20110114232 A | 19-10-2011 |
| | | TW 201134852 A | 16-10-2011 |
| | | US 2011251355 A1 | 13-10-2011 |
| | | WO 2011129519 A2 | 20-10-2011 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 20100048935 A1
- WO 2006103213 A1
- EP 1218190721301 A
- EP 1359177 A
- US 3404109 A
- US 3829505 A
- US 3941849 A
- US 5158922 A
- US 5470813 A
- EP 700949 A
- EP 743093 A
- EP 761708 A
- WO 9740086 A1
- WO 9816310 A1
- WO 0047649 A1
- JP 4145123 B
- WO 9740086 A
- WO 0139883 A
- WO 0180994 A
- WO O180994 A


### In der Beschreibung aufgeführte Nicht-Patentliteratur


- **INOUE et al.** Copolymerization of Carbon Dioxide and Alkylenoxide with Organometallic Compounds. *Die Makromolekulare Chemie,* 1969, vol. 130, 210-220
- *Chemical Communications,* 2011, vol. 47, 141-163